# EUROPEAN PATENT SPECIFICATION

(11) **EP 3 978 918 B1**
(45) Date of publication and mention of the grant of the patent: **21.10.2026**
(21) Application number: 21199133.6
(22) Date of filing: 27.09.2021
(51) Int. Cl.: G01N 30/24, G01N 35/04, G01N 35/10

(54) **AUTOSAMPLER**
AUTOSAMPLER
ÉCHANTILLONNEUR AUTOMATIQUE

(30) Priority: 01.10.2020 GB 202015617
(43) Date of publication of application: 06.04.2022
(73) Proprietor: Thermo Fisher Scientific (Bremen) GmbH, 28199 Bremen (DE); Thermo Fisher Scientific S.p.A, 20090 Rodano (MI) (IT)
(72) Inventor: ZILIOLI, Giacinto, 28199 Bremen (DE); BRODIE, Christopher, 28199 Bremen (DE); GRIEP-RAMING, Jens, 28199 Bremen (DE)
(74) Representative: Boult Wade Tennant LLP

(56) References cited:
- EP-A1- 0 771 470
- EP-A2- 0 565 166
- EP-B1- 0 771 470
- WO-A1-2005/093433
- WO-A1-2013/098202
- US-A- 4 713 974
- US-A- 5 020 297
- US-A- 5 366 697
- US-A- 5 827 478
- US-A1- 2002 053 244
- US-A1- 2003 003 017
- US-A1- 2009 066 950
- US-A1- 2011 124 093
- US-A1- 2016 272 432
- US-A1- 2016 370 284
- US-A1- 2019 383 776
- US-A1- 2020 225 253

## Description

### Technical Field of the Disclosure

The present disclosure concerns autosamplers for dispensing samples. More particularly, this disclosure relates to autosamplers comprising sample trays that are moveable between a plurality of dispensing positions.

### Background to the Disclosure

Autosamplers are devices that provide samples for other systems to analyse or use. Hence, autosamplers are often coupled to analytical instruments. Autosamplers are especially prevalent for elemental analysis and/or elemental analysis isotope ratio mass spectrometry, for the analysis of samples. In these cases, the quantity of various elements, such as nitrogen, carbon, sulphur, oxygen and hydrogen, in solid and liquid samples may be analysed. Nevertheless, autosamplers can also be adapted for dispensing gases. In analytical applications, autosamplers are often used to dispense samples to an elemental analyser. Suitable elemental analysers for this purpose include the FlashSmart^{™} Elemental Analyzer manufactured by Thermo Scientific^{™}, for instance. Autosamplers may also be useful for analysis of low levels of elements present in the atmosphere (e.g. N, O, H, C and S), where these are to be determined in traces in the samples. One example would be the analysis of metals by GD-MS (Glow Discharge Mass Spectrometry), or spark/arc optical emission spectroscopy.

In some known autosamplers, the sample tray is cylindrical and has a plurality of sample holders (e.g. cavities in the sample tray) that can be aligned with an aperture on the body of the autosampler, so as to permit dispensing of samples through the aperture when the sample holders move into alignment with the aperture. Known types of autosamplers include the MAS Autosampler manufactured by Thermo Scientific^{™}, the Zero Blank Autosampler manufactured by Costech, the Uni-Prep System manufactured by Eurovector and various other autosamplers manufactured by LECO Corporation and Elementar. Many known systems use an internal shaft driven by a motor for rotating a sample tray about an axis and include various mechanical parts within the autosampler chamber in order to achieve this rotational motion. In order to provide sealing in such devices, o-rings (which may be formed from elastomers) are typically used on the shaft of a motor.

The use of autosamplers can be extended to water equilibration experiments with oxygen and hydrogen isotope analysis. To this end, a vacuum may be implemented in some known autosamplers.

Autosamplers have been provided in various designs having various features. Autosamplers that are classified as "zero blank" and "zero-exchange" have been of growing interest, due to their ability to ensure that there is reduced inclusion of ambient atmospheric gas into the sample chamber. In this context, "zero blank" means that there is limited addition of, for example, carbon, nitrogen, oxygen and hydrogen (and any other contaminants) from the atmosphere. "Zero-exchange" means that that the autosampler is sealed from the outside ambient air, such that there is no (or very limited) inclusion of water vapour in the samples, or surfaces of the material within which the sample is encapsulated, from an ambient air incursion.

"Zero blank" autosamplers seek to ensure that only carbon and nitrogen from a sample enters an elemental analyser used in conjunction with the autosampler. The purpose of a "zero blank" autosampler is to eliminate contamination that would be associated with ambient air incursion, like N₂ and CO₂. Ensuring a low degree of contamination is especially important when working with samples where the quantities of carbon and nitrogen are low, such as < 10 µg, and lower. In these cases, the sample volume may be much larger (e.g. several hundreds of micrograms or even milligrams), so it can be seen that such samples are at low concentrations and may be prone to contamination. "Zero-exchange" autosamplers seek to reduce inclusion of water vapour, which can facilitate the exchange of hydrogen and/or oxygen isotopes with atoms within the sample, and thus cause data inaccuracies.

US-5366697 (US'697) describes a tray and a magnetic conveyor for moving samples. The device has an exposed structure, rather than a structure having a sealed chamber, which allows ambient air to circulate over samples. The device comprises a recirculating conveyor of trays for continuously supplying trays to a clinical analyser. The conveyer includes bases on which the trays are removably mounted, and means for conveying the bases and trays. In US'697, the trays are removably and rotatably mounted on bases. The magnetic coupling of each tray to the conveying housings is sufficiently compliant to accommodate any inadvertent misalignment of gear teeth at the time of meshing. Thus, the trays are not rigidly attached to the conveyor, due to the compliant coupling. As a consequence, in a case where the controlled and directed rotation of a tray comprises paired north and south magnets, the paired north and south magnets may come into contact with one another. This may lead to the paired magnets demagnetising over time and which may also lead to small debris breaking off over time, which could contaminate samples.

Whilst known autosamplers are satisfactory in some respects, even "zero blank" and "zero-exchange" autosamplers can permit contamination of samples by diffusion of atmospheric gases and contamination due to the use of a lubricant. Moreover, the sample trays in some known autosamplers are prone to allowing samples to become jammed between the sample tray and the body of the autosampler (the samples therefore being lost or broken down), which can contaminate the autosampler and other samples to be analysed. Aspects of this disclosure seek to address these and other issues in known autosamplers.

US4713974A describes a microprocessor-controlled autosampler for use in liquid chromatography. The autosampler is fully programmable by the operator and capable of performing complex sample preparation routines. A spring-loaded sample needle is employed to ensure that the needle makes contact with the bottom of the sample vial as required, for example, when handling extremely small samples. A hollow vial lifter serves as the receptacle for waste wash solvent eliminating the need for a special waste receptacle mechanism.

US5020297A describes an apparatus for filling petri dishes. The apparatus is fitted with a transfer turntable suitable for conveying dishes in the open state from a station for dispensing open dishes to a filling station, and then from the filling station to a station for receiving filled dishes. The turntable comprises a top plate whose openings retain the lids of the dishes and a bottom plate whose openings receive the bottoms of the dishes, said bottoms resting constantly against a fixed refrigerated sole plate while they are being transferred. The turntable is driven by means of a drive disk placed beneath the sole plate and magnetically coupled to the turntable by means of two series of facing magnets.

US5827478A describes a method and apparatus for transportation and processing of multiple protocol assays within an automated immunoassay analyzer instrument. The apparatus includes a cuvette ring movably coupled to a magnet ring. In one embodiment, the magnet ring and cuvette ring are provided having circular shapes. A temperature controlled housing is disposed about the cuvette and magnet rings to provide a rotary incubation and particle separation chamber.

US2002053244A1 describes an autosampler for manipulating a specimen container into and out of a furnace of a parent instrument is disclosed. The autosampler has upper, lower and middle gripping fingers which grip and stabilize a crimped wire, which has a large bend therein. The middle gripping finger is positioned between and opposed to the upper and lower gripping finger and has a portion at one end thereof sized and shaped to receive the bend of the crimped wire. The gripping fingers grip and hold the crimped wire while a tray table moves to place the specimen container on a hook at the bottom of the crimped wire. If the specimen container is sealed, a hole may be punctured therein by a puncturing apparatus, which has a housing which is movable between an upper and lower position and biased toward the lower position.

US2003003017A1 describes an apparatus for in-situ injection of one or more chemical components into a reaction chamber, comprising a reaction chamber for receiving one or more libraries including two or more samples; an injection module in fluid communication with the reaction chamber for permitting in-situ injection of one or more chemical components into the reaction chamber; and a selectively movable transport assembly supported by at least a portion of the reaction chamber for transporting the one or more libraries to the injection module.

US2009066950A1 describes a sample table for a food analyzing device used for analyzing a food sample. Said sample table includes a sample holder for receiving the food sample, a means for moving the sample holder, and a housing that surrounds the moving means. The moving means and the sample holder are magnetically coupled to each other such that the sample holder can be moved relative to the housing outside the housing. Also disclosed is a food analyzing device for spectroscopically analyzing food samples, said device encompassing such a sample table.

### Summary of the Disclosure

Against this background and in accordance with a first aspect, the present disclosure provides an autosampler according to claim 1. The present disclosure provides autosamplers that exhibit a high degree of sealing, with no exposed moving mechanical parts required in order to effect sample tray movement (e.g. rotation or linear motion). This is achieved by driving the sample tray without physically contacting the sample tray, by providing a non-contact coupling to the sample tray. In the context of this disclosure, a non-contact coupling between a motor and a sample tray is one that does not involve any physical contact (e.g. drive shafts and/or chains and/or belts) between a motor or its drivetrain as the sample tray is moved.

The present disclosure further provides autosamplers having self-lubricating material on either the sample tray or on the body of the autosampler, which can help to ensure that there is no gap (or only a very small gap) between the sample tray and the surface against which the sample tray moves. This can improve sealing whilst also reducing friction. The close fit provided by the present disclosure reduces the risk of samples becoming stuck between the sample tray and the body of the autosampler during sample tray rotation, which can lead to the sample tray becoming stuck, resulting into samples being wasted and in contamination of the autosampler body.

The disclosure also relates to the use of non-contact (e.g. magnetic and/or electromagnetic) fields to ensure that the sample tray is effectively coupled to the autosampler body, but able to freely move due to its self-lubricating design. Such configurations ensure that the sample tray cannot be dislodged easily from its correct orientation or become imbalanced, in contrast with existing systems that drive sample tray rotations using a motor that drives a shaft to which the sample tray is physically connected. The problems with implementing such designs are addressed by using the combinations of non-contact couplings and self-lubricating materials disclosed herein.

Throughout this disclosure, various embodiments allow a motor to be provided outside a chamber. In all embodiments, any type of motor can be used with non-contact couplings to cause a sample tray to move. For instance, electrical motors, various types of actuator, pneumatic pistons, generic drive means, and/or motors powered by hydrocarbons, can all be used with the non-contact couplings described herein. Moreover, each of these types of motor can be capable of causing linear or rotational motion. In the context of this disclosure, the term "motor" is intended to encompass any device that changes a form of energy into mechanical energy to produce motion.

In further advantageous embodiments, the sample tray position may be monitored using a sensor, such as a magnetic sensor. The sensor may further be capable of detecting the particular type of sample tray that has been inserted into the autosampler and the autosampler may be configured to adjust its operations accordingly (e.g. by feeding back sensor data to control the motion of the sample tray). Hence, the autosamplers of the present disclosure are extremely accurate, versatile and can accommodate sample trays ranging from several tens of sample holders to hundreds of sample holders.

Thus, in summary. the disclosure improves prior art autosamplers by: reducing diffusion through the use of non-contact coupling (rather than conventional mechanical couplings, e.g. in some prior art systems, gas may diffuse into the sample chamber through the sealing on a rotor shaft) for sample tray rotation; reducing contamination by removing conventional mechanical parts (which degrade and require lubrication) for effecting sample tray rotation; becoming less prone to jamming by ensuring close contact of a sample tray with the body of an autosampler; and reducing the frequency of mechanical breakdown by reducing the number of moving parts relative to existing systems. Further advantages will become apparent from the following description.

### Brief Description of the Drawings

The invention may be put into practice in a number of ways, and preferred embodiments will now be described by way of example only and with reference to the accompanying drawings, in which:
Figure 1 shows schematically an autosampler according to a first embodiment;
Figures 2A, 2B and 2C show schematically the main body of the autosampler of the first embodiment;
Figure 3 shows schematically the sample tray of the autosampler of the first embodiment;
Figure 4 shows schematically the paths traversed by the non-contact coupling elements in the autosampler of the first embodiment;
Figure 5 shows schematically a portion of the main body of an autosampler according to a second embodiment;
Figures 6A, 6B and 6C show schematically an autosampler according to a third embodiment;
Figure 7 shows an autosampler according to a fourth embodiment;
Figure 8 shows the main body of the autosampler of the fourth embodiment;
Figure 9 shows the main body of the autosampler of the fourth embodiment;
Figure 10 shows the sample tray of the autosampler of the fourth embodiment; and
Figure 11 shows an analysis system comprising the autosampler of the fourth embodiment.

### Detailed Description of Preferred Embodiments

Devices in accordance with the present disclosure improve conventional autosamplers by reducing the potential for diffusion of atmospheric gases into the autosampler chamber, reducing the potential for contamination resulting from the operation of moving parts within the autosampler (e.g. shafts and motors) and reducing the potential for samples to become stuck between the interior of the chamber of the autosampler and the sample tray (especially during rotation of the sample tray). Moreover, sealing complex arrangements of moving parts typically requires elastomers, which are prone to degradation and therefore decrease in efficacy over time. Addressing these issues improves reliability and robustness with respect to prior art autosamplers.

In addition to overcoming these primary challenges, the autosamplers according to the present disclosure provide further advantages in that they permit heating of the sample chamber and sample tray, can be easily connected to a vacuum pump to evacuate the chamber in the autosampler, can have multiple tray types to hold different numbers and/or quantities of samples, can easily be connected to a purge line (e.g. a helium gas purge line, or any other inert gas) and can be provided with an isolation valve for disconnecting the sample chamber from the reactor system (or any other analyser) of external systems (such as, for example, an elemental analyser) when not in use.

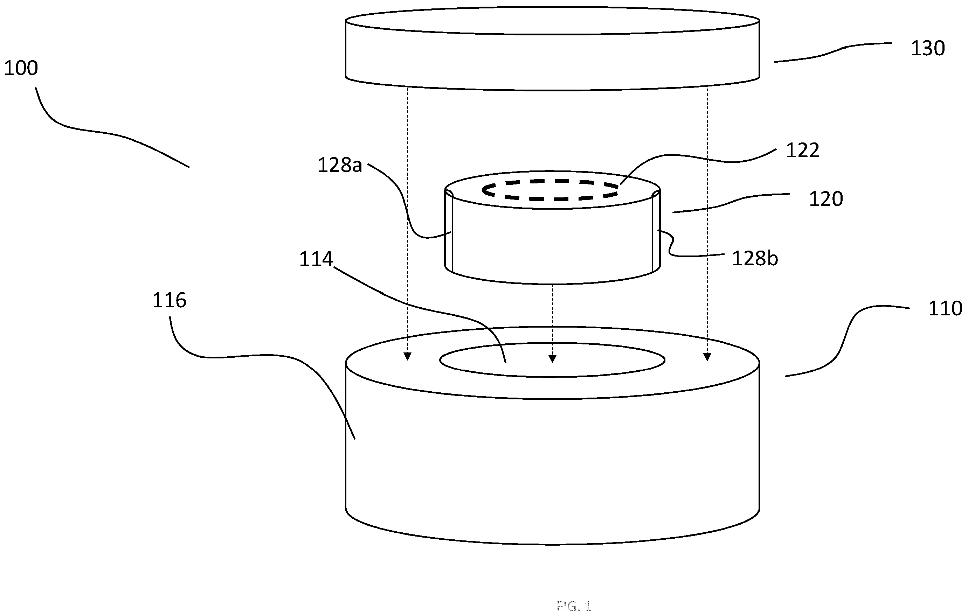

Referring to Figure 1, there is shown an autosampler 100 for providing such advantages, according to a first embodiment. The autosampler 100 in Figure 1 is depicted as having three main components: a main body 110; a sample tray 120; and a lid 130. These three components can be assembled to form a sealed autosampler 100, as shown by the arrows having broken lines in Figure 1.

The sample tray 120 has a generally cylindrical form and its top surface has a circular array of sample holders 122. The array of sample holders 122 is depicted using a broken line, to indicate that various numbers of sample holders are possible. The sample tray 120 has non-contact coupling elements 128a and 128b at the outer edge of the sample tray 120, for allowing the sample tray 120 to be rotated by means of a non-contact coupling. Providing the non-contact coupling elements 128a and 128b towards an outer edge of the tray (as opposed to a point near the axis of the sample tray 120) ensures that a relatively low strength coupling is required to achieve a given torque on the sample tray 120 (because the torque exerted on the tray 120 by a given force is proportional to the distance from the axis of rotation). The non-contact coupling elements 128a and 128b are depicting as extending along the length of the curved edge of the sample tray 120, but do not necessarily need to take this form. For example, the non-contact coupling elements 128a and 128b could be small regions on the sample tray 120. The only requirements on the shape and size of the non-contact coupling elements 128a and 128b is that they should dimensioned and positioned so as to permit them to interact with corresponding coupling elements on the autosampler 100.

The sample holders 122 on the sample tray 120 can be filled to accommodate samples for subsequent dispensing of the samples. The sample holders 122 may be cavities extending from the top surface of the sample tray 120 through to the bottom of the sample tray 120.

The main body 110 of the autosampler 100 defines a sealable chamber 114, into which the sample holder 120 can be inserted. The main body 110 has upstanding sidewalls 116. Like the sample tray 120, the main body 110 is also generally cylindrical and the sealable chamber 114 is a generally cylindrical opening. The sidewalls 116 are a three-dimensional structure that have: an interior surface that defines the edges of the sealable chamber 114; an upper surface that is brought into abutment with the lid 130 to seal the chamber 114; and an exterior surface, which provides the outer surface of the autosampler 100. The internal structure of the sidewalls 116 may also house certain components (e.g. the coupling elements 118a and 118b, and the sensor 117) of the autosampler 100. The sealable chamber 114 provided by the main body 110 (which includes the upstanding sidewalls 116) is dimensioned so as to be suitable for accommodating the sample tray 120 with a close fit, whilst allowing free rotation of the sample tray 120 within the chamber.

In the autosampler of this embodiment, the lid 130 is depicted as being a cylinder. As mentioned previously, the lid 130 can be brought into contact with the upper surface of the sidewalls 116 of the main body 110 to close and seal the chamber 114. The precise coupling mechanism between the lid 130 and the main body 110 is not shown in Figure 1, for simplicity. The generally cylindrical shapes of the main body 110 and the lid 130 are not essential and various other shapes can be provided, provided that the chamber 114 and sample tray 120 have complementary shapes.

It can be seen that the sealable chamber 114 of the main body 110 can be closed by the lid 130 to provide a sealed volume, in which the sample tray 120 sits. The surfaces of this sealed volume are: the interior surface of the sidewalls 116; the bottom, interior surface of the sealable chamber 114; and the lowermost surface of the lid 130. For the purposes of this disclosure, the autosampler 100 may be considered as having a body that, when the autosampler 100 is assembled, defines this sealed volume. The body of the autosampler 100 may be considered to be the entirety of the autosampler, except for the space occupied by this sealed volume and the sample tray 120 itself. Hence, in the context of this disclosure, the lid 130 may be considered to be a part of the body of the autosampler 100, even though it is distinct from the main body 110.

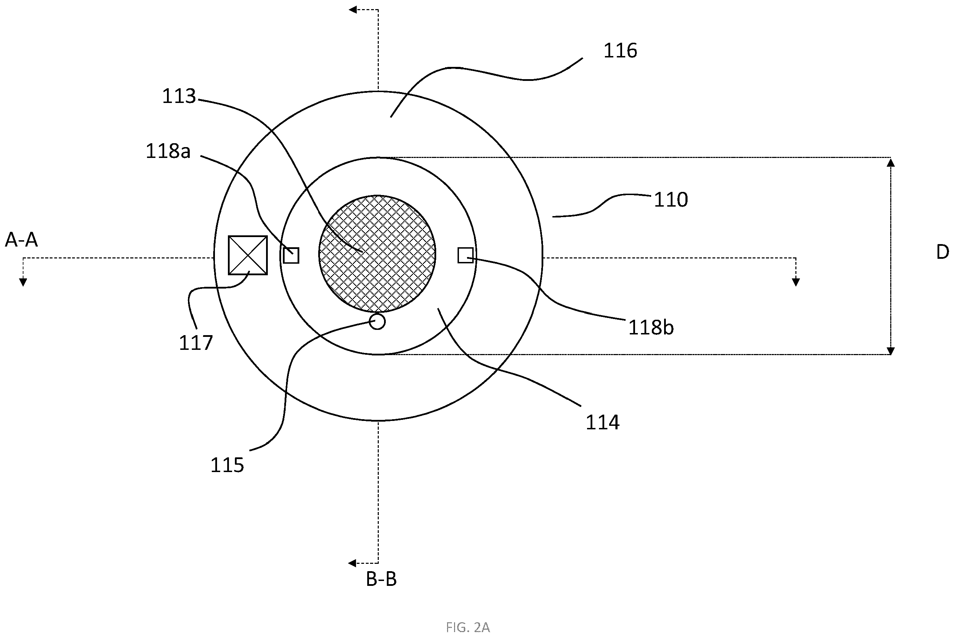

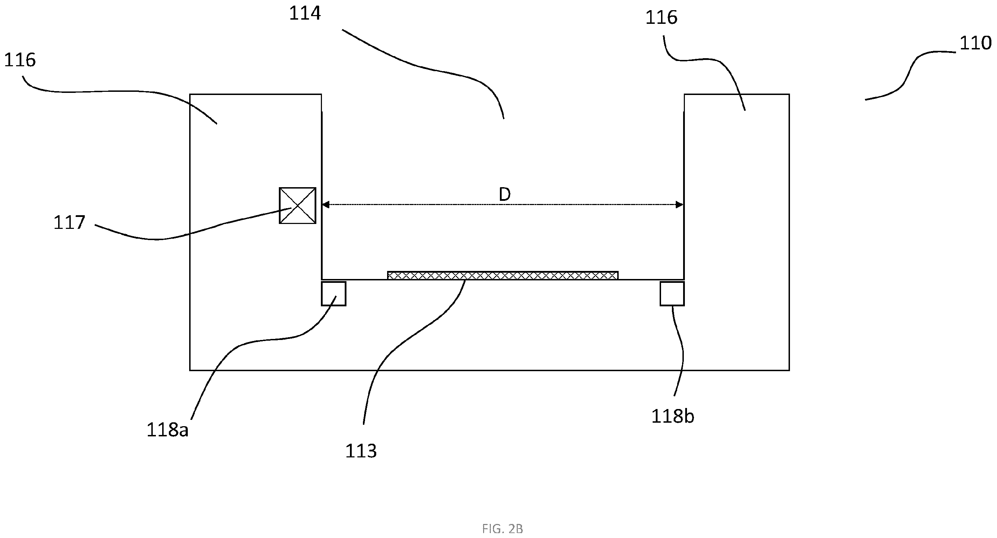

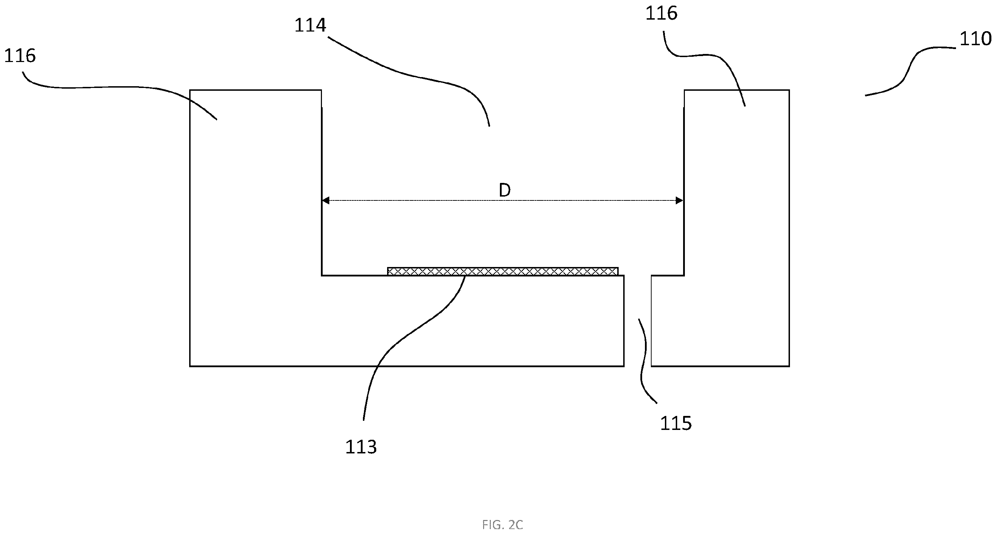

In Figures 2A, 2B and 2C, there are shown schematic diagrams of the main body 110 of the autosampler 100 of this embodiment. Figures 2A, 2B and 2C are taken at a single instant in time. Figure 2A is a plan view of the main body 110, in which the main body 110 is shown as being transparent (except for its edges), so that the relative positions of the other components (e.g. the sensor 117, the coupling elements 118a and 118b, and the aperture 115) can be seen more easily. Figures 2B and 2C show cross sections of the main body 110 taken along the lines A-A and B-B of Figure 2A, respectively. In Figures 2B and 2C, the main body 110 is again shown as being transparent to aid visualisation. Figures 2A, 2B and 2C each show the diameter, D, of the chamber 114.

The main body 110 of Figures 2A, 2B and 2C comprises two non-contact coupling elements 118a and 118b, which correspond to (i.e. can be brought into close alignment with) the non-contact couplings 128a and 128b of the sample tray 120. In the plan view of Figure 2A, the non-contact coupling elements 118a and 118b are within the bottom portion of the main body 110 and are relatively close to the edge of the interior surface of the sidewalls 116 of the main body 110.

The bottom surface of the main body 110 also has an aperture 115, which is positioned radially inward of the non-contact coupling elements 118a and 118b. As can be seen in Figure 2C, the aperture 115 extends through the bottom of the main body 110 to permit the passage of a sample from the sample tray 120 to any system external to the autosampler 100. The position of the aperture 115 on the bottom surface corresponds to the position of the sample holders on the sample tray 120, so that samples can pass from the sample holders 122 through the aperture 115 when the sample tray 120 is in a dispensing position (i.e. when a sample holder of the array 122 on the sample tray 120 is aligned with the aperture 115 of the main body 110). In other words, the distance between the aperture 115 and the axis of the main body 110 is similar to the distance between the array of sample holders 122 and the axis of the sample tray 120. This spacing ensures that each of the sample holders 122 can be brought into alignment with the aperture 115 as the sample tray 120 rotates about its rotational axis, within the chamber 114.

A region of self-lubricating material 113, shown with hatching in Figures 2A, 2B and 2C, is provided on the interior bottom surface of the chamber 114. The region of self-lubricating material 113 is thin, such that when the sample tray 120 sits within the chamber 114, the bottom of the sample tray 120 is close to the base of the chamber 114, to reduce the likelihood of jamming of samples between the sample tray 120 and the chamber 114. The sample tray 120, self-lubricating material 113 and the bottom of the chamber 114 may collectively be shaped and dimensioned to allow the sample tray 120 to be in contact with the self-lubricating material 113 and close to, but not in contact with, the bottom surface of the chamber 114.

Direct contact between the sample tray 120 and the base of the chamber 114 should be avoided, since direct contact between these surfaces (which may both be formed from, for example, aluminium) could lead to seizure. Moreover, large gaps between the sample tray 120 and the bottom surface of the chamber 114 can allow samples to slip underneath the sample tray 120 and cause jamming. For instance, tin, aluminium and silver sample containers may slip underneath the sample tray 120 and cause jamming, so the close fit provided by embodiments of the present disclosure reduces the risk of such jamming occurring.

The region of self-lubricating material 113 is generally circular and has a smaller diameter than the diameter, D, of the chamber 114. This achieves two advantages: firstly, this ensures that a sample can pass from the sample tray 120 to the aperture 115; and secondly, this ensures that there is no material inhibiting the non-contact coupling between the elements 118a, 118b of the main body 110 and the corresponding elements 128a and 128b of the sample tray.

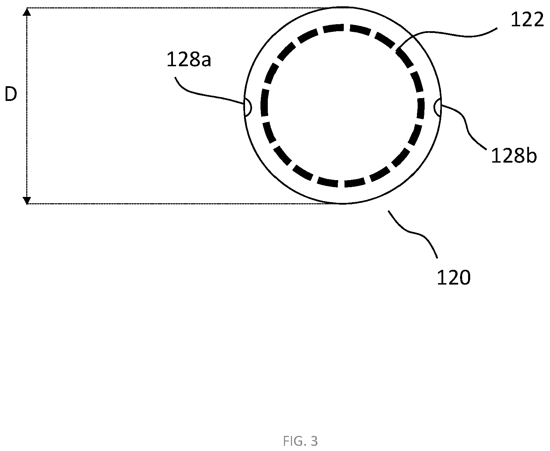

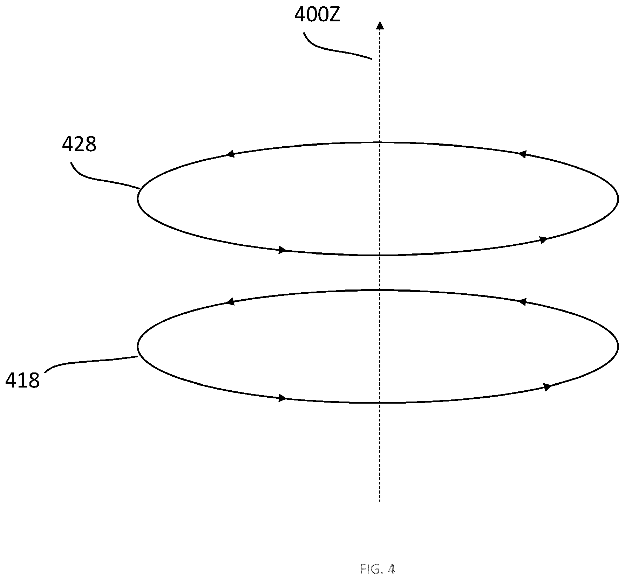

In generalised terms, it is preferable that the one or more coupling elements on the sample tray and one or more coupling elements in the body of the autosampler are not separated by the self-lubricating material. Stated differently, the autosampler may be devoid of self-lubricating material directly between one or more coupling elements on the sample tray and one or more coupling elements in the body of the autosampler. In the context of this disclosure, for self-lubricating material to be "directly between" two co-operating coupling elements (e.g. the elements 118a, 188b of Figure 2A and 128a, 128b of Figure 3), it must be possible, when the coupling elements are aligned with one another (i.e. separated only in the axial direction in the case of rotational motion) to draw a straight line from any point on one coupling element to any point on the other coupling element and pass though the self-lubricating material. As can be seen in Figure 4, which is discussed in greater detail below, when coupling elements undergo rotational motion, the coupling elements traverse two circular paths 418 and 428. These circular paths together define a cylinder and it is beneficial for the surface of this cylinder not to intersect any self-lubricating material. If the cylinder were to intersect any self-lubricating material, then the strength of the non-contact coupling may be reduced. Hence, it is advantageous to ensure that a region directly between the coupling elements is devoid of self-lubricating material.

The sidewalls 116 of the main body 110 also comprise a sensor 117 configured to detect the position of the sample tray 120 as the sample tray 120 rotates within the chamber 114. As noted previously, the sample tray is moveable between a number of dispensing positions (this number being determined by the number of sample holders in the array of sample holders 122). Hence, the sensor 117 may be configured to determine which of the dispensing positions the sample tray 120 is in at any given time. It should be noted that the sensor 117 may be provided in the base of the main body 110 (i.e. at or towards the bottom of the main body 110) rather than in the sidewall 116.

In Figure 3, a plan view of the sample tray 120 is depicted. The sample tray 120 of Figure 3 is substantially identical to that of Figure 1. It can be seen that the sample tray 120 has a diameter, D, that is substantially the same as the diameter, D, of the chamber 114. Hence, the sample tray 120 substantially conforms to the shape of the chamber 114. It is preferable for the sample tray 120 to be slightly narrower than the chamber 114, to permit rotation of the sample tray 120 within the chamber 114. The mechanical tolerance for the size of the sample tray 120 relative to the size of the chamber 114 is preferably from 2 mm to 3 mm, although smaller (e.g. less than 2 mm or less than 1 mm) or larger (e.g. larger than 3 mm) manufacturing tolerances can be used.

The sample tray 120 is suitable for dispensing solids, liquids and/or gases. Solid samples may be placed within the sample holders 122 for subsequent dispensing and analysis. Moreover, liquids or gases can be dispensed using the autosamplers 100 described herein, for instance using sealed vials within the sample holders 122. In such cases, the autosampler 100 may comprise a mechanism for obtaining samples from sealed containers. Suitable such mechanisms include, for example, a syringe (e.g. to pierce a sealed vial and obtain a sample from the vial). Moreover, solids, liquids and gases can all be put into various other types of receptacles (e.g. sealed capsules) and these receptacles can be placed in the sample holders 122.

In use, the sample tray 120 sits within the sealed chamber 114 provided by the main body 110 and the lid 130. The sample tray 120 is pulled towards the bottom of the chamber 114 under the influence of gravity (and optionally also by an attractive force between the coupling elements 118a, 118b, 128a and 128b), such that there is a contact interface between the bottom of the sample tray 120 and the layer of self-lubricating material 113 on the bottom of the chamber 114. The self-lubricating material 113 serves to reduce friction at this contact interface.

The non-contact coupling elements 118a and 118b of the main body 110 and the corresponding non-contact coupling elements 128a and 128b of the sample tray interact to cause the sample tray 120 to rotate within the chamber 114. The rotation of the sample tray 120 within the chamber 114 causes the sample tray 120 to move between a plurality of dispensing positions.

In the embodiment of Figures 1 to 3, rotational motion of the sample tray 120 is achieved without any moving mechanical parts being in physical contact with the sample tray 120 or within the chamber 114. In particular, this is achieved by causing the non-contact coupling elements 118a and 118b of the main body 110 to move about a circular path centred on the central axis of the chamber 114. For instance, the non-contact coupling elements 118a and 118b of the main body 110 may be mounted on a drive plate that is itself connected to a shaft and driven by a motor (which may be in the main body 110 of the autosampler 100 of entirely external to the autosampler 100). As there is a non-contact coupling between the non-contact coupling elements 118a and 118b of the main body 110 and the non-contact coupling elements 128a and 128b of the sample tray 120, the non-contact coupling is capable of transmitting torque from a motor to the sample tray 120, thereby causing the sample tray 120 to rotate. The motor can be of any type, including, for example, any one or more of: an electrical motor; various types of actuator; one or more pneumatic pistons; generic drive means; and/or a motor powered by hydrocarbons. In Figures 1 to 3, rotational motion is shown.

In Figure 4, two circular trajectories 418 and 428 are shown, which are both centred on an axis 400Z. The axis 400Z corresponds to the axis of the chamber 114 of the autosampler 100 of Figures 1 to 3, and also to the axis of the sample tray 120 of Figures 1 to 3. Trajectory 418 shows the path of the non-contact coupling elements 118a and 118b within the main body 110, when the autosampler 100 of Figures 1 to 3 is in use. Similarly, trajectory 428 shows the path along which the non-contact coupling elements 128a and 128b of the sample tray 120 travel within the chamber 114 when the autosampler 100 of Figures 1 to 3 is in use.

Due to the non-contact coupling of the present disclosure, when the non-contact coupling elements 118a and 118b of the main body 110 rotate, so too does the sample tray 120, by virtue of the interaction between the non-contact coupling elements 128a and 128b of the sample tray with those of the main body 110. The trajectories 418 and 428 share a common axis 400Z and have the same diameter, but are spaced apart in the direction of the axis 400Z. This is because the coupling elements 118a and 118b on the sample tray 120 and the coupling elements in the main body 110 are likewise spaced apart in the axial direction of the autosampler 100, but are positioned at the same radial distance from the axis of the chamber 114. In other words the non-contact coupling elements 118a and 118b of the main body 110 undergo circular motion and thereby cause the non-contact coupling elements 128a and 128b on the sample tray 120 to undergo corresponding circular motion about the same axis, but spaced apart in the direction of that axis. The non-contact coupling elements 128a and 128b on the sample tray 120 are effectively pulled about a circular path, causing the sample tray 120 to rotate.

The non-contact coupling elements 118a and 118b may be moveable permanent magnets. For instance, if the non-contact coupling elements 118a and 118b are two permanent magnets, then they may be positioned in a north-south configuration at 180 degrees relative to each other. Such magnets can be provided in the main body 110 and moved by, for example, a stepper motor to cause the magnets in the main body 110, and hence the sample tray 120 to rotate. In this case, corresponding non-contact coupling elements 128a and 128b on the sample tray 120 may also be two permanent magnets, which are also at 180 degrees relative to each other and configured to interact with the non-contact coupling elements 118a and 118b.

Whilst Figures 1 to 4 depict an embodiment in which the non-contact coupling elements 118a and 118b of the main body 110 are moveable, in other advantageous embodiments (as will be discussed in greater detail below) the sample tray 120 can be caused to move by other means. For instance, the non-contact coupling elements 118a and 118b of the first embodiment may be replaced by stationary non-contact coupling elements that are configured to exert a force that varies in time. Thus, using appropriate timing circuitry, the sample tray 120 can be made to undergo rotational motion without any other moving parts being required in the autosampler 100 (except for the sample tray 120 itself).

The above-described autosamplers provide a number of advantages, as discussed previously. In generalised terms, the present disclosure advantageously provides an autosampler for dispensing samples, the autosampler comprising: a sample tray for holding the samples to be dispensed, wherein the sample tray is moveable between a plurality of dispensing positions; and a non-contact coupling configured to move the sample tray between the plurality of dispensing positions.

As noted previously, existing autosamplers typically cause a sample tray to rotate by physically coupling the sample tray to a shaft, with the shaft itself being coupled to a motor. By replacing the shaft(s) of such systems with a non-contact coupling, the sample tray may advantageously be physically separated from the moving parts of the system, which would otherwise wear mechanically in the vicinity of the sample tray. Separating all moving components from the sample tray reduces the risk of contamination of samples in several ways. Firstly, the moving parts of a driveshaft may eject small debris as moving parts rub against one another (especially when any lubricant is depleted and/or fouled) and may therefore contaminate the samples. Moreover, conventional motors require lubrication and the lubricant may diffuse towards and hence contaminate the samples. A non-contact coupling allows physical separation between the sample tray and any motors and thus reduces the risk of contamination of samples.

In a further generalised aspect, the present disclosure provides an autosampler for dispensing samples, comprising: a sample tray for holding the samples to be dispensed, the sample tray being moveable between a plurality of dispensing positions, the sample tray and the body of the autosampler comprising respective contact surfaces that contact each other as the sample tray moves between the plurality of dispensing positions, wherein the contact surface of at least one of (and optionally both of) the sample tray and the body of the autosampler comprises a self-lubricating material. The contact surface may comprise self-lubricating material in several ways: self-lubricating material may be provided as a coating on the components; and/or the components may be (at least partially) formed from self-lubricating material.

The autosamplers described herein may also comprise a friction-reducing element provided on a surface between the sample tray and the body of the autosampler that is distinct from the sample tray and the body of the autosampler. For example, a disc (e.g. a rotatable disc) coated with self-lubricating material could be provided underneath the sample tray, to allow the sample tray to rotate within the chamber. In such a case, there may be no self-lubricating material on the sample tray or on the body of the autosampler, because the coated disc serves as a friction-reducing element. Therefore, in general terms, the autosamplers described herein may comprise a surface between the sample tray and the body of the autosampler that comprises self-lubricating material. An interior surface in the sealable chamber (e.g. any one or more of: a rotatable disc between the sample tray and the body of the autosampler; a surface of the body of the autosampler; and a surface of the sample tray) may comprise or be coated with self-lubricating material.

The use of a self-lubricating material is beneficial for several reasons. Conventional motors require lubrication and, as noted previously, conventional lubricants are prone to diffusion, which can contaminate samples. Typical motor lubricants are liquids, such as mineral oils, silicone oils, or similar, whereas self-lubricating materials are typically solids at room temperature and therefore have significantly lower vapour pressures and are therefore less prone to diffusion and/or cross-contamination by accidental contact transfer. Moreover, conventional lubricants require periodic replenishment in order to continue functioning adequately. On the other hand, providing a self-lubricating material allows a controlled amount of lubricant to be continuously provided at the contact interface between the autosampler body and the sample tray, thereby ensuring adequate lubrication for relatively long periods (i.e. until the region of self-lubricating material has completely worn away, which typically takes longer than the typical time for a conventional lubricant to disperse and/or become degraded).

The autosampler defines a chamber (which is preferably gas-tight and capable of holding a vacuum) for holding the sample tray within the chamber. The non-contact coupling is configured to exert a force on the sample tray through a surface of the chamber (e.g. through the surface of the base of the chamber and/or through the surface of the sidewall of the chamber), so as to move the sample tray between the plurality of dispensing positions. This permits a force (or a torque in the case of rotational motion) to be applied to the sample tray from outside the chamber, thereby permitting physical separation between the moving components of a motor and the samples. Moreover, the chamber is sealable to prevent gas entering the sample chamber when the autosampler is in operation. Such autosamplers may further comprise a motor outside the chamber, the motor configured to cause the sample tray to move using the non-contact coupling. In this way, all moving parts can be kept away from a sample tray by means of a solid wall, and a sealed chamber can be used to reduce or eliminate any risk of samples being contaminated by a motor.

When a self-lubricating material is provided on a contact surface of the body of the autosampler, it is advantageous for the contact surface comprising self-lubricating material to be an interior surface of the chamber. Providing self-lubricating material on an interior surface of the chamber, rather than on the sample tray, permits multiple different sample trays (e.g. sample trays for holding different numbers of samples) to be used with the autosampler, without each sample tray needing to be provided with self-lubricating material. This therefore reduces manufacturing costs.

In general terms, it is preferable that the non-contact coupling is further configured to force (e.g. to urge) the sample tray towards a base of the chamber (e.g. the bottom surface of the chamber). One important advantage provided by the present disclosure is the ability to ensure a close fit between the components of the autosampler through the use of self-lubricating material and the elimination of moving parts in the chamber. The non-contact couplings of the present disclosure are particularly beneficial in this respect, because they allow a tight seal to be formed by holding the sample tray in the correct position, whilst simultaneously being capable of effecting motion without the need for arrangements of shafts and o-rings (or q-rings, or rotary shaft seals, or lock-ring seals). Shafts and o-rings (or other shaft sealing types) may reduce the degree of sealing and/or the closeness of the fit between the components of the device and are hence at risk of jamming and contamination of samples. Thus, ensuring a tight fit between the components of the device is beneficial.

In generalised terms, the foregoing embodiments are also advantageous because the sample tray is rotatable about an axis so as to move between the plurality of dispensing positions. Providing a rotating sample tray leads to a compact arrangement that allows easy alignment. It is also generally preferable that one or more coupling elements on the sample tray are positioned at an outer edge of the sample tray. As mentioned previously, a given force applied to the sample tray results in a higher torque when applied further from the axis of rotation. Despite rotational configurations being beneficial, linear arrangements are also possible and fall within the scope of this disclosure.

Embodiments of this disclosure are particularly advantageous when: one or more coupling elements on the sample tray are spaced apart from one or more respective coupling elements in the body of the autosampler in the direction of the axis; and/or one or more coupling elements on the sample tray and one or more respective coupling elements in the body of the autosampler are equidistant or substantially equidistant from the axis in the radial direction. It is possible to implement embodiments of this disclosure with coupling elements traversing concentric, co-planar circular paths, for example by providing the coupling elements 118a and 118b in the sidewalls 116 of the main body 110 of the first embodiment. However, a compact autosampler with a smaller radius can be provided by positioning coupling elements in the main body of the autosampler directly below the corresponding coupling elements on the sample tray. The co-axial arrangement depicted in Figure 4, which is employed throughout this disclosure, is therefore highly beneficial. Stated differently, the coupling elements traverse paths that are essentially two equal circles that share a common axis and the coupling elements are spaced apart along the direction of the axis.

As noted above, the coupling elements 118a and 118b are preferably in the base of the main body 110 and the sensor 117 is preferably in the sidewalls 116. However, other arrangements are possible. For instance, the sensor 117 and coupling elements 118a and 118b may be in the sidewalls 116; or the sensor 117 and coupling elements 118a and 118b may be in the base of the main body 110; or the coupling elements 118a and 118b may be in the sidewalls 116 and the sensor 117 may be in the base of the main body 110.

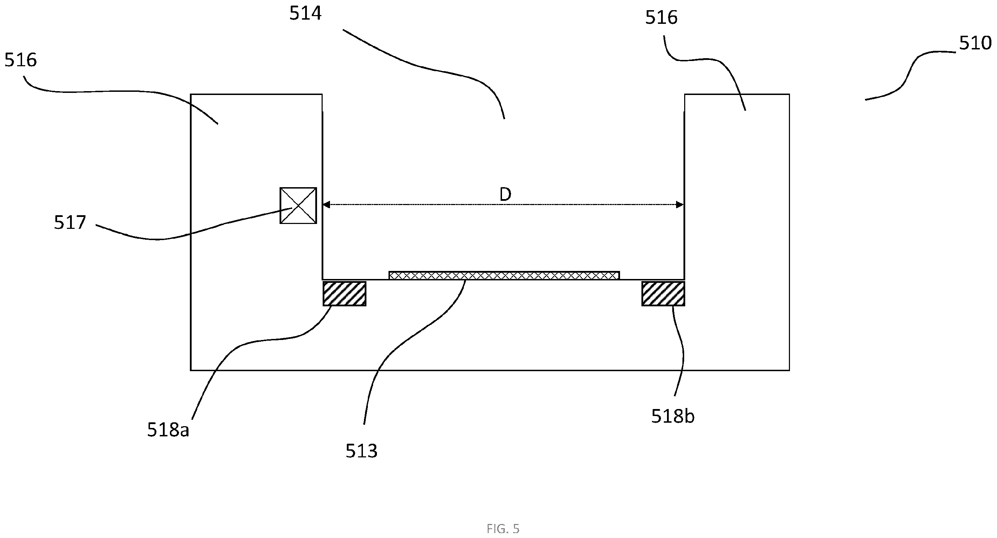

Turning next to Figure 5, there is depicted a main body 510 of an autosampler in a second embodiment. The main body is suitable for use with the lid 130 and the sample tray 120 of the first embodiment, so these are not depicted in Figure 5, for simplicity. The main body 510 is identical to the main body 110 of the first embodiment in many respects and corresponds with the main body 110 shown in Figure 2B. The main body 510 is generally cylindrical and comprises a cylindrical sealable chamber 514, the bottom surface of which is provided with a region of self-lubricating material 513. The cylindrical chamber 514 is defined by the interior surface of the upstanding sidewalls 516 of the main body 510 and a sensor 517 is provided within the sidewalls 516. Each of these components of the main body 510 are configured to operate in an analogous fashion to the corresponding elements of the first embodiment. The main body 510 also comprises an aperture that is analogous to the aperture 115 of the first embodiment, but this is not illustrated from Figure 5 for simplicity.

The non-contact coupling elements 518a and 518b of the second embodiment are positioned at a similar distance from the axis of the chamber 514 (i.e. relatively close to the sidewalls 516, for example closer to the sidewalls 516 than to the central axis of the autosampler), similarly to those of the first embodiment. However, the main body 510 of the second embodiment differs from the main body 110 of the first embodiment in that its non-contact coupling elements 518a and 518b are fixed, rather than moveable. Thus, in this embodiment, the non-contact coupling elements 518a and 518b do not traverse circular paths within the main body 510.

In use, the non-contact coupling elements 518a and 518b of the second embodiment can be used to cause a sample tray to rotate within the chamber 514, to move the sample tray between dispensing positions. For instance, the non-contact coupling elements 518a and 518b can be controlled by circuitry configured to activate, deactivate and/or reverse the polarity of the non-contact coupling elements 518a and 518b. The circuitry may further be configured to adjust the strength of the non-contact coupling. In this way, the non-contact coupling elements 518a and 518b can be controlled selectively to drive non-contact coupling elements on a sample tray in circular motion.

For instance, the non-contact coupling elements 518a and 518b may be electromagnets, which can be used to exert varying magnetic forces on permanent magnets mounted on the sample tray 520. Electromagnets can also be used to induce currents in conducting elements on the sample tray 520. Thus, electromagnetic induction (which can be considered to be a form of magnetic coupling) can equally be used to cause the sample tray 520 to rotate. This may be achieved by transmitting power and/or a force through the solid material of the main body 510.

In general terms, therefore, one or more coupling elements in the body of the autosampler may comprise an electromagnet configured to: exert a magnetic force on one or more coupling elements on the sample tray so as to cause the sample tray to move between the plurality of dispensing positions; and/or apply an electromagnetic field to one or more coupling elements on the sample tray so as to cause the sample tray to move between the plurality of dispensing positions by electromagnetic induction. These arrangements are advantageous because they may entirely eliminate moving parts within the body of the autosampler, by avoiding the need for coupling elements to be driven in circular paths like in Figure 4. Electrical circuits configured to control the current flowing through electromagnets are less prone to failure than mechanical motors configured to physically move coupling elements (e.g. permanent magnets traversing circular paths).

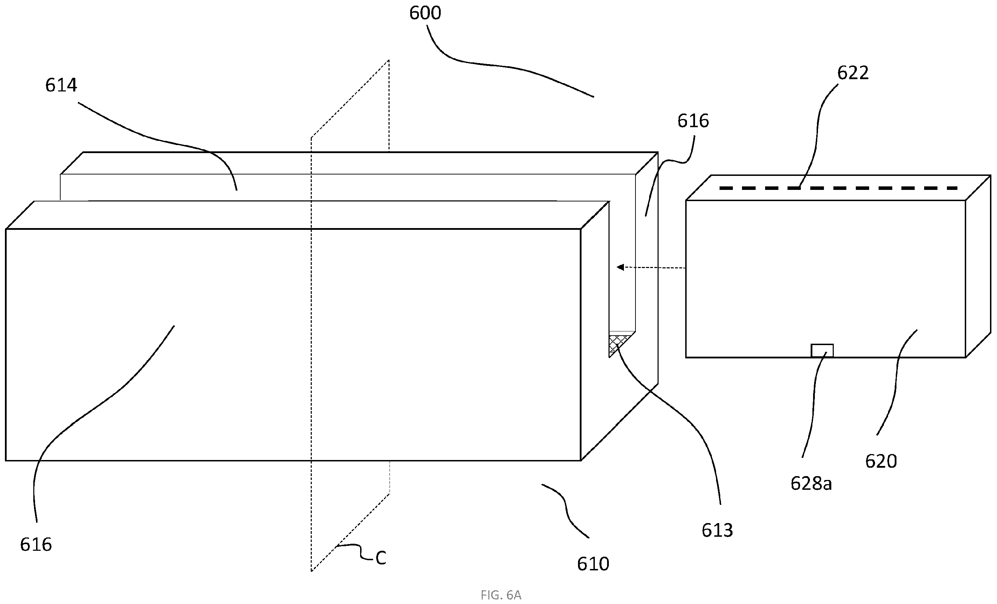

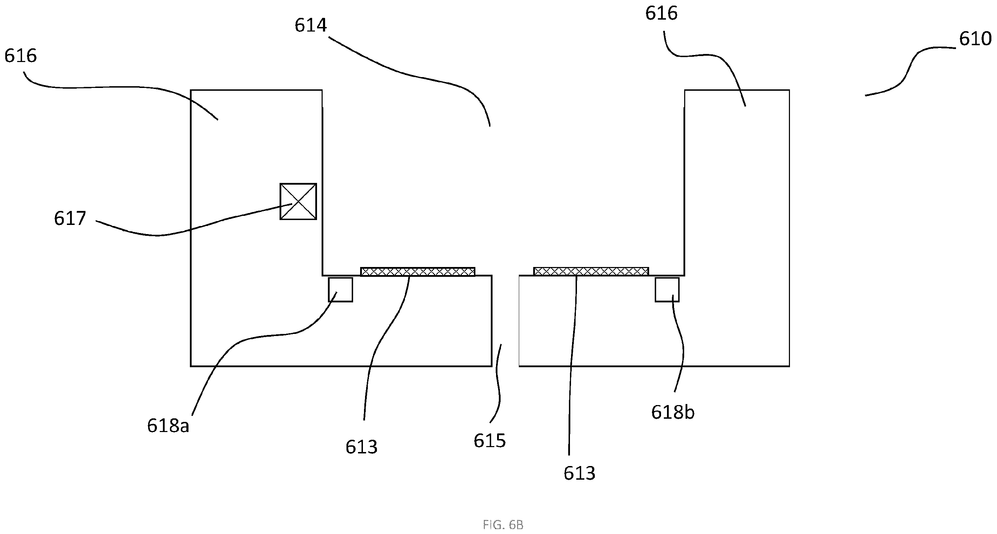

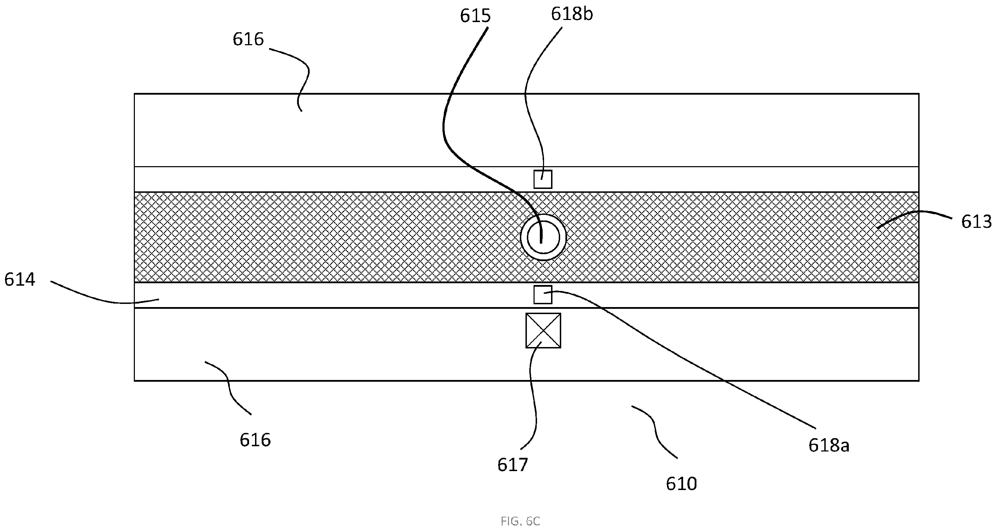

Turning next to Figures 6A, 6B and 6C, an autosampler 600 according to a third embodiment is depicted. Figure 6A is a perspective view of the main body 610 and the sample tray 620 of the autosampler 600, Figure 6B is a cross-sectional view of the main body 610, and Figure 6C is a plan view of the main body 610. The cross-sectional view of Figure 6B is taken by cutting the main body 610 in the plane, C, in Figure 6B. Figures 6A, 6B and 6C omit a lid, because it will be appreciated that similar lids to those of the earlier embodiments can be employed in this embodiment.

The autosampler 600 of the third embodiment operates according to similar principles to the autosamplers of the first and second embodiments, but has a linear geometry rather than a circularly symmetric geometry. The autosampler 600 comprises a main body 610, which is elongate. The main body 610 has a sealable chamber 614, which is also elongate and which extends between the interior surfaces of the upstanding sidewalls 616. The main body 610 has a substantially U-shaped cross section along its length and the sealable chamber 614 of this embodiment may be considered to be a channel in the main body 610. A region of self-lubricating material 613, shown with hatching in Figures 6A, 6B and 6C, is provided on the interior bottom surface of the chamber 114.

In Figure 6A, the sample tray 620 of this embodiment is also depicted. The sample tray 620 is elongate and has a cross section that corresponds with the cross section of the sealable chamber 614. The sample tray 620 comprises a linear array of sample holders 622. As in previous embodiments, the sample holders 622 may be cavities extending from the top surface of the sample tray 620 through to the bottom of the sample tray 620, so as to permit a sample to exit the sample tray 620 into an aperture 615 of the main body 610. The sample tray further 620 comprises non-contact coupling elements 628a, only one of which is shown in Figure 6A. An analogous non-contact coupling element on the rear side of the sample tray 620.

The cross-section of the main body 610 of the autosampler 600 is depicted in Figure 6B. This cross-section is similar to that shown in Figure 2B. The main body 610 comprises a sensor 617 within the interior surface of the sidewalls 616, for sensing the position of the sample tray 620 as the sample tray 620 moves within the chamber 614.

From Figures 6B and 6C, it can be seen that the main body 620 again comprises a single aperture 615 for receiving samples dispensed from the sample tray 620. The aperture 615 is aligned with region of the bottom interior surface of the main body 620 that is devoid of self-lubricating material 613, in order to permit the passage of samples to the aperture 615 and to avoid inhibiting the non-contact coupling.

In use, the autosampler 600 of this embodiment operates according to similar principles as the first and second embodiments. The non-contact coupling elements 618a and 618b interact with complementary non-contact coupling elements on the sample tray 620 to cause the sample tray 620 to move along the length of the chamber 614. Sample holders in the array of sample holders 622 come into alignment with the aperture 615 in turn, and samples can be dispensed successively from the sample tray 620.

The non-contact coupling elements 618a and 618b may be fixed, as in the first embodiment, with appropriate circuitry for causing the sample tray to move. Alternatively, the non-contact coupling elements 618a and 618b can be moveable along the length of the main body 610 (similarly to in the second embodiment, but with linear rather than circular motion), so as to pull the sample tray 620 along the length of the main body 610. Permanent magnets and/or electromagnets can be used as the coupling elements 618a, 618b, 628a and 628b in order to effect this motion. In a further variation on this linear arrangement, it is also possible to stack sample trays on top of one another and provide an autosampler capable of dispensing samples from multiple stacked sample trays.

The autosampler 600 may be powered by any kind of motor capable of causing linear motion. For example, the autosampler may comprise any one or more of: an electrical motor; various types of actuator; one or more pneumatic pistons; generic drive means; and/or a motor powered by hydrocarbons.

This linear arrangement provides, in generalised terms, an autosampler in which the chamber defines a channel. The sample tray has a shape corresponding with a shape of the channel. The sample tray is configured to move between a plurality of dispensing positions by moving along the length of the channel.

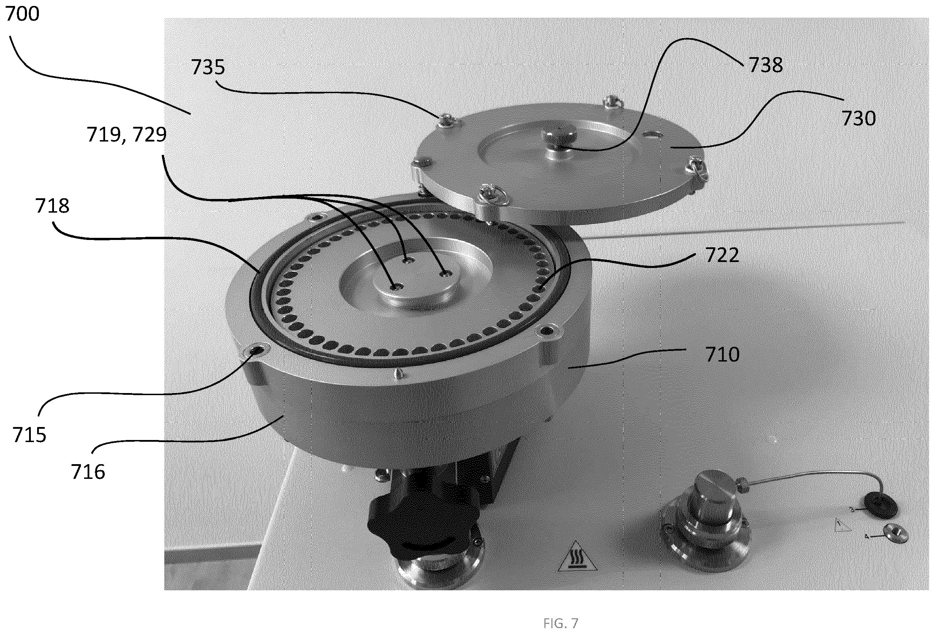

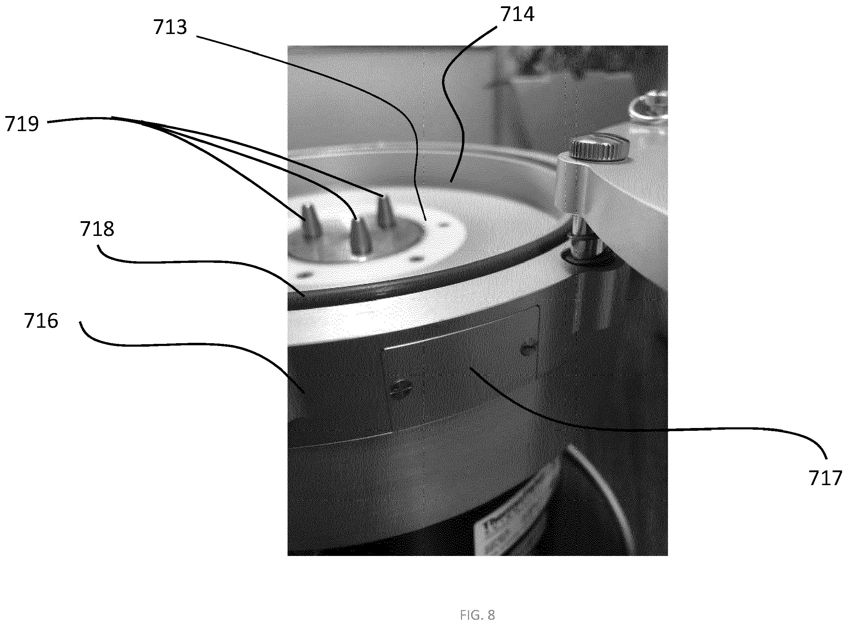

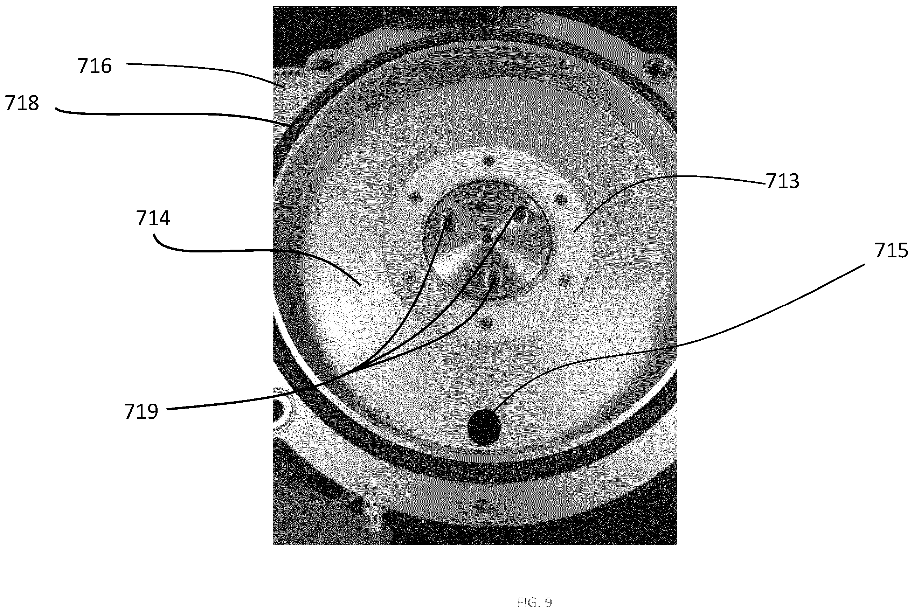

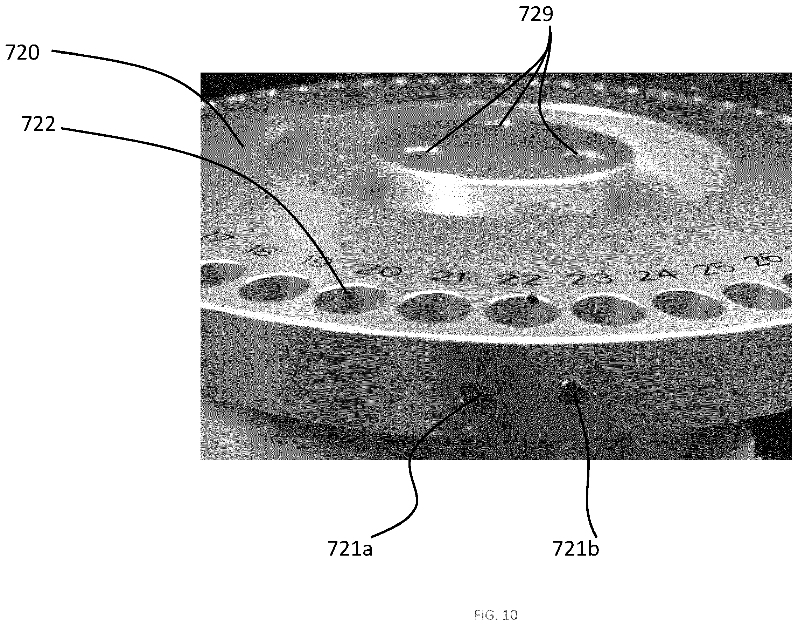

Turning next to Figures 7, 8, 9 and 10, there is shown an autosampler 700 according to a fourth embodiment. The autosampler 700 employs a rotational geometry, similar to the autosamplers of the first and second embodiments. The autosampler 700 comprises a main body 710, sample tray 720 and lid 730, which are similar to the previously-described embodiments. Figure 7 depicts the autosampler 700 with the sample tray 720 in the chamber 714 of the main body 710 and the lid 730 open. Figures 8 and 9 depict the main body 710 of the autosampler 700 without a sample tray 720 in the chamber 714. Figure 10 shows the sample tray 720 in isolation from the main body 710 and the lid 730.

In Figure 7, it can be seen that the lid 730 is rotatably attached to the main body 710, so as to permit easy opening and closing of the autosampler 700. The lid 730 and the main body comprise, respectively, complementary locking mechanisms 735 and 715. In this embodiment, the locking mechanisms 735 and 715 are screw threaded mechanisms that allow the lid 730 to be secured in an air-tight fashion to the main body 710, thereby sealing the chamber 714 with the sample tray 720 in the chamber.

To facilitate and improve the air-tight seal between the lid 730 and the main body 710, the upper surface of the sidewalls 716 on the main body 710 is provided with an o-ring 718. The o-ring is resilient (and preferably comprises a polymer material) and configured to prevent air outside the autosampler 700 from entering the chamber 714 when the lid 730 is coupled to the main body 710 using the locking mechanisms 715 and 735. Hence, the o-ring 718 helps to seal the sample chamber 714 when the lid 730 is closed. The lid 730 also comprises a sealing member 738, which in this case is a venting nut that comprises a screw thread that can be used to seal or unseal the autosampler 700. The sealing member 738 may be provided by any opening that is capable of being plugged (sealed) with a screw, such as a flat bottom screw, and preferably also includes a sealing device, o.g. an o-ring.

During a flushing operation (which is optional when using the autosampler 700), after loading the sample tray 720 with samples and placing the sample tray 720 within the chamber 714, a flow of helium is used to flush the chamber 714 containing the samples, and the sealing member 738 allows the helium flow to exit the chamber 714. When the chamber 714 is completely evacuated of any residual ambient air, the sealing member 738 may be closed and the dispensing and analysis processes can commence.

In this embodiment, motion of the sample tray 720 is effected by a stepper motor (not shown) in the main body 710. The stepper motor is connected to a disc mounted on the stepper motor shaft (also not shown), with the disc having four permanent magnets mounted thereon. The four permanent magnets on the disc serve as non-contact coupling elements that drive other coupling elements, and are therefore similar to the coupling elements 118a and 118b of the first embodiment. The stepper motor, shaft and disc with four magnets are all located in the bottom of the main body 710, completely outside the sealable chamber 714.

The sample tray 720 fits closely within the sealable chamber 714 and, in use, rests at the bottom of the chamber 714 in contact with a ring of self-lubricating material 713 on the base of the chamber 714. The sample tray 720 has, on its underside, four complementary magnets, and the sample tray 720 is caused to rotate by the interaction between the four rotatable magnets in the main body 710 and the four magnets on the sample tray 720. This interaction occurs through the bottom wall of the sealable chamber 714, which is formed from solid aluminium in this embodiment.

Thus, in generalised terms, this disclosure advantageously provides a non-contact coupling that is preferably a magnetic non-contact coupling. Magnetic couplings are relatively cheap to provide and manufacture and are capable of providing all of the advantages of non-contact couplings described extensively herein. In embodiments of the disclosure, the non-contact coupling may comprise one or more coupling elements on the sample tray and one or more respective coupling elements in the body of the autosampler. In preferred embodiments, the one or more coupling elements on the sample tray comprise a permanent magnet; and/or the one or more coupling elements in the body of the autosampler comprise a permanent magnet. Permanent magnets are readily available and facilitate a strong coupling and a close fit between the components of the autosampler. Each of the one or more coupling elements on the sample tray may be or may comprise permanent magnet and, similarly, each of the one or more coupling elements in the body of the autosampler may be or may comprise a permanent magnet. In such cases, it is preferable that one or more coupling elements in the body of the autosampler are moveable, so as to move the sample tray between the plurality of dispensing positions.

Returning now to the specific embodiment, it can be seen in Figures 8 and 9 that the main body 710 comprises a chamber 714 (as described previously) for receiving the sample tray 720, similarly to the first and second embodiments. The bottom surface of the chamber 714 comprises a ring of self-lubricating material 713, which is similar to the first and second embodiments. As in previous embodiments, the main body 710 comprises an aperture 715 and the sample tray 720 comprises a (circular) array of sample holders 722, which can be brought into alignment with the aperture 715 to permit dispensing of samples.

In this particular case, the self-lubricating material is approximately 1 mm thick, but it can be a coating of PTFE having a thickness of 1 mil (approximately 25 µm), which may coat the entirety of the bottom surface of the chamber 714. In this particular example, the self-lubricating material 713 is provided in a ring shape having an approximately uniform thickness (approximately 1 mm), which is fixed it to the bottom of the chamber 713 with small screws below the contact surface.

An important difference between this embodiment and the first, second and third embodiments, is the provision of projections 719 in the base of the chamber 714, which fit into corresponding openings 729 in the sample tray 720, as shown in Figures 7, 8 and 9. The sample tray 720 inside the chamber 714 is supported in an aligned state by these three finger-like projections 719, which are mounted on a disc that is at the centre of the ring of self-lubricating material 713. The disc is itself mounted on a ball-bearing to permit easy rotation. The ball bearing, disc and projections 719 are all inside the sealable chamber 714. The three projections 719 and corresponding openings 729 in this embodiment help to keep the sample tray 720 centred and balanced on the rotatable disc. This reduces the tendency of the sample tray 720 to become jammed and reduces the risk of samples escaping from the sample holders 722.

In general terms, therefore, the chamber and sample tray preferably comprise a set of one or more projections and a complementary set of one or more openings for aligning the sample tray within the chamber. The alignment of the components and the degree of sealing in the present disclosure is thereby improved. Advantageously, the set of one or more projections may be rotatably mounted (e.g. mounted together on a common structure such that they rotate about a common axis) within the chamber and configured to engage (e.g. fit within, so as to hold the sample tray in alignment) the complementary set of one or more openings on the sample tray. This permits free rotation of the sample tray and the projections whilst maintaining the alignment of the sample tray. Whilst finger-like projections mounted to a disc and corresponding openings are depicted in Figures 7 to 10, other complementary structures (e.g. ridges and grooves) may also be employed advantageously and can provide similar benefits. Moreover, other numbers of projections and openings can be used for ensuring alignment. For instance, one, two or more than three pairs of projections and openings could be provided. Moreover, the projections may be provided on the sample tray rather than in the base of the chamber and in such a case, the complementary openings would be in the chamber.

Returning to the specific embodiment depicted in Figures 7 to 10, a sensor (not shown) is provided within the main body 710 of the autosampler 700. Figure 8 shows a window 717 for accessing the sensor. Behind this window are Hall sensors, which are completely outside the chamber 714, for sensing the position of the sample tray 720.

As shown in Figure 10, the sample tray 720 comprises two small magnets 721a and 721b on its outer circumferential surface. The magnets 721a and 721b may be, for example, neodymium magnets. These magnets 721a and 721b are not used for causing the sample tray 720 to rotate. Instead, the magnets 721a and 721b are used by the sensor for sensing the position of the sample tray 720. For example, the sensor may be configured to detect the distance to the magnets and thereby determine the position of the sample tray 720 based on this distance. The provision of these small magnets 721a and 721b helps to assure that the position of the sample tray 720 is known to a higher degree of precision than in existing systems. As prior art systems do not have such precision, they are prone to samples inadvertently escaping from the sample tray, causing jamming.

Moreover, the number and/or distance between the two small magnets 721a and 721b may be specific to a particular type of sample tray 720. For instance, different sample trays 720 may have different numbers of sample holders. Sample trays may be provided having 35+1, 49+1 and/or 78+2 sample holders. In this context, a sample tray is typically initially positioned to an unused opening in the sample holder, which resembles a regular sample holder, that is used for alignment of the sample tray but not for holding a sample or for measurement. Thus, a sample tray described as having "35+1" holders is suitable for containing a maximum of 35 samples, but the tray physically has 36 openings (the 35 sample holders and one unused opening) with the unused opening not being used for holding a sample. The same is true of a 49+1 sample tray, which has 50 openings in total but is only used for the analysis of 49 samples. In the case of a 78+2 sample tray, the small diameter of the sample holders (due to the relatively large number of sample holders) requires two unused openings to provide an initial zero position. Therefore the total number of usable samples holders on a 78+2 sample tray is 78, but the tray physically has 80 openings.

Each different type of sample tray 720 (e.g. a 35+1, 49+1 or 78+2 sample tray) may be manufactured with different numbers of small magnets 721a and 721b and/or different distances between the small magnets 721a and 721b. Accordingly, the autosampler 700 may also be configured to determine which specific type of sample tray 720 has been inserted into the autosampler 700, based on measuring the number and/or spacing and/or orientation of the small magnets 721a and 721b. The type of tray 720 can be fed back to a control unit that controls the stepper motor, to inform the stepper motor how far to rotate the sample tray 720.

In general terms, there is therefore provided an autosampler comprising a sensor for sensing the position and/or the type of the sample tray, preferably wherein the sensor is configured to sense one or more coupling elements on the sample tray. The sensing may be performed by sensing the coupling elements on the sample tray and/or by sensing distinct magnets that are specifically configured to identify uniquely the sample tray. The sensor may be a Hall sensor, but other types of sensor may be used. In embodiments of this disclosure, the sample tray may comprise an identifier configured to permit the sensor to identify uniquely the type of (and optionally the number of sample holders in) the sample tray. The identifier of the sample tray may comprise one or more magnets (and preferably two magnets) having an arrangement that is unique to the specific type of sample tray, so as to permit easy detection of the position and/or type of the sample tray. If two magnets are provided on the sample tray for the purposes of detecting the position and/or type of the sample tray, then the mutual orientation (e.g. the spacing, or perhaps other aspects of their relative positions) may uniquely identify the type of the sample tray in question. Hence, in general terms, the sample tray may comprise an identifier indicative of the type of the sample tray and the identifier may be one or more magnets (and preferably a plurality of magnets) having an arrangement that uniquely identifies the type of the sample tray.

Thus, this embodiment provides an almost perfectly sealed chamber 714, due to the significant differences in the drive mechanism when compared with other known autosamplers, which eliminates a key source of air diffusion in prior art autosamplers, whilst allowing precise control and measurement of the motion of the sample tray. The use of a stepper motor with four permanent magnets connected thereto provides a device that is cheap and easy to manufacture whilst allowing high precision to be achieved. Nevertheless, other numbers of magnets (or generic coupling elements) may be used. For instance, one, two or three magnets can also be provided on the sample tray and a corresponding number on the bottom drive plate. Moreover, more than four magnets (or generic coupling elements) may also be used. Whilst a stepper motor is described, any type of motor can be used for causing the drive plate holding the magnets to rotate.

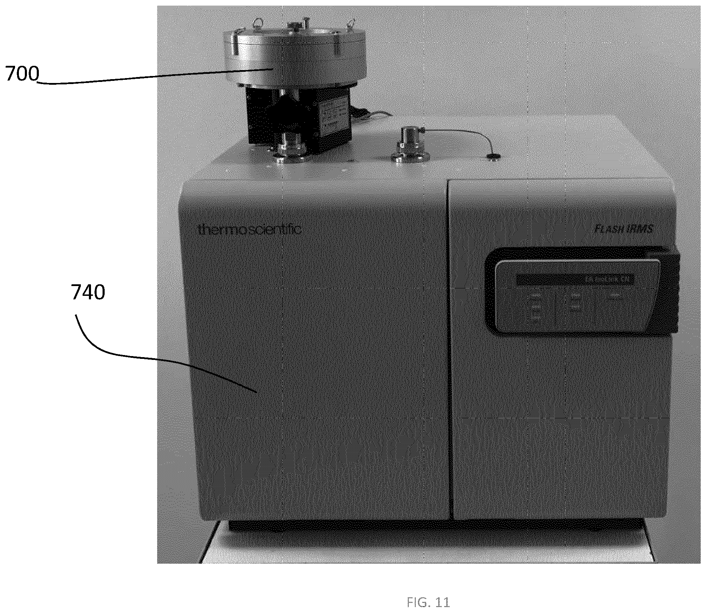

Turning next to Figure 11, there is shown a system for analysing a sample. The system comprises the autosampler 700 of the fourth embodiment. The autosampler is connected to an isotope ratio mass spectrometer 740, specifically a Flash IRMS manufactured by Thermo Scientific^{™}. The isotope ratio mass spectrometer 740 receives a sample dispensed from the autosampler and analyses the dispensed sample. Due to the use of an autosampler according to the present disclosure, the isotope ratio mass spectrometer 740 can perform analysis of samples reliably, quickly and accurately. Other types of analytical instruments can be used.

Hence, returning to the generalised terms used previously, there is provided a system for analysing a sample, comprising: any of the autosamplers described herein, configured to dispense the sample; and an analytical instrument configured to receive the dispensed sample from the autosampler and to analyse the dispensed sample. The analytical instrument may be one or more of: an elemental analyser; a mass spectrometer; an ion mobility spectrometer; an infrared spectrometer; a Fourier-Transform infrared spectrometer; a Near-infrared spectrometer; a Fourier-Transform Near-infrared spectrometer; an NMR spectrometer; a UV/VIS spectrometer; a Raman spectrometer; an ion chromatograph; a titrator; a gas chromatograph; a gas chromatography mass spectrometer; and a liquid chromatograph. Various other analytical instruments can be used with the autosamplers of the present disclosure.

It will be appreciated that many variations may be made to the above apparatus and methods whilst retaining the advantages noted previously. For example, various types of self-lubricating materials can be employed in the autosamplers described herein. For instance, Teflon-based materials (e.g. materials containing polytetrafluoroethylene) are preferred, but other materials can be used. For instance, low-friction polymers may be used, such as polyimide, Polyether Ether Ketone (PEEK), polyphenylene sulphide (PPS), Nylon, Acetal and/or Polyester may also be used, due to their good sliding friction properties. Alternatively, materials that are impregnated with lubricant may also be used. Such a material could have solid (e.g. graphite, MoS₂, and/or lead) material impregnated. Moreover, self-lubricating material has only been depicted on the bottom surface of the chamber of the devices described in, but can be used to advantageous effect on other components. For instance, self-lubricating material may be provided on the interior surface of the sidewalls and/or on any surface of the sample trays described herein, to reduce friction and contamination relative to prior art autosamplers.

Various types of magnets can be used as non-contact coupling elements. Whilst neodymium magnets are preferred, magnets of various sizes and strengths can be employed and are advantageous. For instance, samarium cobalt, alnico, and ceramic or ferrite magnets can all be used.

Moreover, whilst magnets and electromagnetic fields have been described for moving a sample tray, pressure pulses can also be used to effect movement of the sample tray. For instance, pressure tube actuators (such as a Bourdon tube and/or a pressure tube actuator such as in the Element 2^{™}, Element XR^{™} and Element GD^{™} systems manufactured by Thermo Scientific^{™}) may be combined with a drive mechanism (for example, a mechanical clock drive mechanism). In this way, pressure pulses of compressed air could be used to effect sample tray movement. Similarly to the previously-described embodiments, this approach ensures that moving mechanical components (such as a drivetrain) need not be in physical contact with the sample tray, which provides the same benefits in terms of reduced risk of contamination noted above. In such an arrangement, there is no rotational feedthrough from the outside to the inside of the chamber. In this arrangement, the Bourdon tube may be a tube that sits inside the sample chamber (e.g. underneath of the sample tray). Then, when the tube is pressurised, it causes a movement, which could be coupled to the tray and could cause the tray to move a small distance (the distance corresponding to the spacing between sample holders in the sample tray). When then the tube is de-pressurised, the tube moves back to its original position. When the connection to the tray is decoupled during the depressurisation, the tray does not move. Sequential pulses of pressurizing and depressurizing the tube would then move it forward, in a similar way to a clock gear drive.

In a further alternative implementation of the present disclosure, a drive motor may be provided in the inside of the chamber. Such an arrangement would also be resilient to diffusion, due to the elimination of any shafts passing from outside the chamber into the chamber.

## Claims

1. An autosampler (100, 600, 700) for dispensing samples, the autosampler comprising:
a sample tray (120, 520, 620, 720) for holding the samples to be dispensed, wherein the sample tray comprises a plurality of sample holders (122, 622, 722) and is moveable between a plurality of dispensing positions, each sample holder being a cavity extending from a top surface of the sample tray through to a bottom surface of the sample tray;
a body (110, 510, 610, 710) of the autosampler, defining a sealable chamber (114, 514, 614, 714) that prevents gas entering the sealable chamber in use, wherein the sealable chamber holds the sample tray within the sealable chamber, wherein the body of the autosampler comprises an aperture (115, 615, 715) extending through a bottom wall of the body, the aperture for permitting the passage of a sample from inside the sealable chamber to a system external to the body; and
a non-contact coupling comprising one or more coupling elements (128a, 128b, 628a, 628b) on the sample tray and one or more respective coupling elements (118a, 118b, 518a, 518b, 618a, 618b) in the body of the autosampler, the non-contact coupling configured to exert a force on the sample tray through a surface of the sealable chamber, so as move the sample tray between the plurality of dispensing positions;
wherein the bottom wall of the body is arranged below the sample tray, and each dispensing position of the plurality of dispensing positions is a position of the sample tray at which a sample holder of the plurality of sample holders is aligned with the aperture extending through the bottom wall of the body.

2. The autosampler (100, 600, 700) of claim 1, further comprising a motor outside the sealable chamber (114, 514, 614, 714), the motor configured to cause the sample tray (120, 520, 620, 720) to move using the non-contact coupling.

3. The autosampler (100, 600, 700) of any of claims 1 to 2, wherein the non-contact coupling is configured to force the sample tray (120, 520, 620, 720) towards a base of the sealable chamber (114, 514, 614, 714).

4. The autosampler (100, 600, 700) of any preceding claim, wherein the sealable chamber (114, 514, 614, 714) and sample tray (120, 520, 620, 720) comprise a set of one or more projections (719) and a complementary set of one or more openings (729) for aligning the sample tray within the sealable chamber, preferably wherein the set of one or more projections is rotatably mounted within the sealable chamber and configured to engage the complementary set of one or more openings (729) on the sample tray.

5. The autosampler (100, 600, 700) of any preceding claim, wherein the autosampler (100, 600, 700) comprises a surface (113, 513, 613, 713) between the sample tray (120, 520, 620, 720) and the body (110, 510, 610, 710) of the autosampler that comprises self-lubricating material, preferably wherein: an interior surface (113, 513, 613, 713) in the sealable chamber (114, 514, 614, 714) comprises self-lubricating material; and/or a surface of the tray comprises self-lubricating material.

6. The autosampler (100, 600, 700) of any preceding claim, wherein the non-contact coupling is a magnetic non-contact coupling.

7. The autosampler (100, 600, 700) of any preceding claim, wherein:
the one or more coupling elements (128a, 128b, 628a, 628b) on the sample tray (120, 520, 620, 720) comprise a permanent magnet; and/or
the one or more coupling elements (118a, 118b, 518a, 518b, 618a, 618b) in the body (110, 510, 610, 710) of the autosampler comprise a permanent magnet.

8. The autosampler (100, 600, 700) of any preceding claim, wherein one or more coupling elements (118a, 118b, 518a, 518b, 618a, 618b) in the body (110, 510, 610, 710) of the autosampler are moveable, so as to move the sample tray (120, 520, 620, 720) between the plurality of dispensing positions.

9. The autosampler (100, 600, 700) of any preceding claim, wherein the one or more coupling elements (118a, 118b, 518a, 518b, 618a, 618b) in the body (110, 510, 610, 710) of the autosampler comprise an electromagnet configured to: exert a magnetic force on one or more coupling elements (128a, 128b, 628a, 628b) on the sample tray (120, 520, 620, 720) so as to cause the sample tray to move between the plurality of dispensing positions; and/or apply an electromagnetic field to one or more coupling elements of an actuator within the autosampler, so as to cause the sample tray to move between the plurality of dispensing positions by electromagnetic induction.

10. The autosampler (100, 600, 700) of any preceding claim, wherein one or more coupling elements (128a, 128b, 628a, 628b) on the sample tray (120, 520, 620, 720) are positioned at an outer edge of the sample tray.

11. The autosampler (100, 600, 700) of any preceding claim, when dependent on claim 4, wherein the autosampler is devoid of self-lubricating material directly between one or more coupling elements (128a, 128b, 628a, 628b) on the sample tray (120, 520, 620, 720) and one or more coupling elements (118a, 118b, 518a, 518b, 618a, 618b) in the body (110, 510, 610, 710) of the autosampler.

12. The autosampler (100, 600, 700) of any preceding claim, wherein the sample tray (120, 520, 620, 720) is rotatable about an axis so as to move between the plurality of dispensing positions, preferably wherein one or more coupling elements (128a, 128b, 628a, 628b) on the sample tray are co-axial with one or more respective coupling elements (118a, 118b, 518a, 518b, 618a, 618b) in the body (110, 510, 610, 710) of the autosampler.

13. The autosampler (100, 600, 700) of claim 12, wherein:
one or more coupling elements (128a, 128b, 628a, 628b) on the sample tray (120, 520, 620, 720) are spaced apart from one or more respective coupling elements (118a, 118b, 518a, 518b, 618a, 618b) in the body (110, 510, 610, 710) of the autosampler in the direction of the axis; and/or
one or more coupling elements (128a, 128b, 628a, 628b) on the sample tray (120, 520, 620, 720) and one or more respective coupling elements (118a, 118b, 518a, 518b, 618a, 618b) in the body (110, 510, 610, 710) of the autosampler are substantially equidistant from the axis in the radial direction.

14. The autosampler (100, 600, 700) of any preceding claim, further comprising a sensor (117) for sensing the position and/or the type of the sample tray (120, 520, 620, 720), preferably wherein the sensor is configured to sense one or more coupling elements (128a, 128b, 628a, 628b) on the sample tray, preferably wherein the sample tray comprises an identifier indicative of the type of the sample tray, preferably wherein the identifier is one or more magnets (721a, 721b) having an arrangement that uniquely identifies the type of the sample tray.

15. A system for analysing a sample, comprising:
the autosampler (100, 600, 700) of any preceding claim, configured to dispense the sample; and
an analytical instrument configured to receive the dispensed sample from the autosampler and to analyse the dispensed sample, preferably wherein the analytical instrument is one or more of: an elemental analyser; a mass spectrometer; an ion mobility spectrometer; an infrared spectrometer; a Fourier-Transform infrared spectrometer; a Near-infrared spectrometer; a Fourier-Transform Near-infrared spectrometer; an NMR spectrometer; a UV/VIS spectrometer; a Raman spectrometer; an ion chromatograph; a titrator; a gas chromatograph; a gas chromatography mass spectrometer; and a liquid chromatograph.

## Patentansprüche

1. Autosampler (100, 600, 700) zum Abgeben von Proben, der Autosampler umfassend:
einen Probenträger (120, 520, 620, 720) zum Halten der abzugebenden Proben, wobei der Probenträger eine Vielzahl von Probenhaltern (122, 622, 722) umfasst und zwischen einer Vielzahl von Abgabepositionen bewegbar ist, wobei jeder Probenhalter ein Hohlraum ist, der sich von einer oberen Oberfläche des Probenträgers durchgehend zu einer unteren Oberfläche des Probenträgers erstreckt;
einen Körper (110, 510, 610, 710) des Autosamplers, der eine abdichtbare Kammer (114, 514, 614, 714) definiert, die ein Eintreten von Gas in die abdichtbare Kammer in Verwendung verhindert, wobei die abdichtbare Kammer den Probenträger innerhalb der abdichtbaren Kammer hält, wobei der Körper des Autosamplers einen Durchlass (115, 615, 715) umfasst, der sich durch eine untere Wand des Körpers erstreckt, wobei der Durchlass zum Ermöglichen des Durchtritts einer Probe aus einem Inneren der abdichtbaren Kammer zu einem körperexternen System dient; und
eine berührungslose Kopplung, umfassend ein oder mehrere Kopplungselemente (128a, 128b, 628a, 628b) auf dem Probenträger und ein oder mehrere jeweilige Kopplungselemente (118a, 118b, 518a, 518b, 618a, 618b) in dem Körper des Autosamplers, wobei die berührungslose Kopplung konfiguriert ist, um eine Kraft auf den Probenträger durch eine Oberfläche der abdichtbaren Kammer auszuüben, um so den Probenträger zwischen der Vielzahl von Abgabepositionen zu bewegen;
wobei die untere Wand des Körpers unterhalb des Probenträgers angeordnet ist und jede Abgabeposition der Vielzahl von Abgabepositionen eine Position des Probenträgers ist, an der ein Probenhalter der Vielzahl von Probenhaltern mit dem Durchlass ausgerichtet ist, der sich durch die untere Wand des Körpers erstreckt.

2. Autosampler (100, 600, 700) nach Anspruch 1, ferner umfassend einen Motor außerhalb der abdichtbaren Kammer (114, 514, 614, 714), wobei der Motor konfiguriert ist, um den Probenträger (120, 520, 620, 720) zu veranlassen, sich unter Verwendung der berührungslosen Kopplung zu bewegen.

3. Autosampler (100, 600, 700) nach einem der Ansprüche 1 bis 2, wobei die berührungslose Kopplung konfiguriert ist, um den Probenträger (120, 520, 620, 720) hin zu einer Basis der abdichtbaren Kammer (114, 514, 614, 714) zu drängen.

4. Autosampler (100, 600, 700) nach einem der vorstehenden Ansprüche, wobei die abdichtbare Kammer (114, 514, 614, 714) und der Probenträger (120, 520, 620, 720) einen Satz von einem oder mehreren Vorsprüngen (719) und einen komplementären Satz von einer oder mehreren Öffnungen (729) zum Ausrichten des Probenträgers innerhalb der abdichtbaren Kammer umfassen, vorzugsweise wobei der Satz von einem oder mehreren Vorsprüngen innerhalb der abdichtbaren Kammer drehbar montiert ist und konfiguriert ist, um den komplementären Satz von einer oder mehreren Öffnungen (729) auf dem Probenträger in Eingriff zu nehmen.

5. Autosampler (100, 600, 700) nach einem der vorstehenden Ansprüche, wobei der Autosampler (100, 600, 700) eine Oberfläche (113, 513, 613, 713) zwischen dem Probenträger (120, 520, 620, 720) und dem Körper (110, 510, 610, 710) des Autosamplers umfasst, die selbstschmierendes Material umfasst, vorzugsweise wobei: eine innere Oberfläche (113, 513, 613, 713) in der abdichtbaren Kammer (114, 514, 614, 714) selbstschmierendes Material umfasst; und/oder eine Oberfläche des Trägers selbstschmierendes Material umfasst.

6. Autosampler (100, 600, 700) nach einem der vorstehenden Ansprüche, wobei die berührungslose Kopplung eine magnetische berührungslose Kopplung ist.

7. Autosampler (100, 600, 700) nach einem der vorstehenden Ansprüche, wobei:
das eine oder die mehreren Kopplungselemente (128a, 128b, 628a, 628b) auf dem Probenträger (120, 520, 620, 720) einen Dauermagneten umfassen; und/oder
das eine oder die mehreren Kopplungselemente (118a, 118b, 518a, 518b, 618a, 618b) in dem Körper (110, 510, 610, 710) des Autosamplers einen Dauermagneten umfassen.

8. Autosampler (100, 600, 700) nach einem der vorstehenden Ansprüche, wobei ein oder mehrere Kopplungselemente (118a, 118b, 518a, 518b, 618a, 618b) in dem Körper (110, 510, 610, 710) des Autosamplers bewegbar sind, um so den Probenträger (120, 520, 620, 720) zwischen der Vielzahl von Abgabepositionen zu bewegen.

9. Autosampler (100, 600, 700) nach einem der vorstehenden Ansprüche, wobei das eine oder die mehreren Kopplungselemente (118a, 118b, 518a, 518b, 618a, 618b) in dem Körper (110, 510, 610, 710) des Autosamplers einen Elektromagneten umfassen, der konfiguriert ist zum: Ausüben einer magnetischen Kraft auf ein oder mehrere Kopplungselemente (128a, 128b, 628a, 628b) auf dem Probenträger (120, 520, 620, 720), um so den Probenträger zu veranlassen, sich zwischen der Vielzahl von Abgabepositionen zu bewegen; und/oder Anlegen eines elektromagnetischen Feldes an ein oder mehrere Kopplungselemente eines Aktuators innerhalb des Autosamplers, um so den Probenträger zu veranlassen, sich durch elektromagnetische Induktion zwischen der Vielzahl von Abgabepositionen zu bewegen.

10. Autosampler (100, 600, 700) nach einem der vorstehenden Ansprüche, wobei ein oder mehrere Kopplungselemente (128a, 128b, 628a, 628b) auf dem Probenträger (120, 520, 620, 720) an einem äußeren Rand des Probenträgers positioniert sind.

11. Autosampler (100, 600, 700) nach einem der vorstehenden Ansprüche, wenn abhängig von Anspruch 4, wobei der Autosampler frei von selbstschmierendem Material direkt zwischen einem oder mehreren Kopplungselementen (128a, 128b, 628a, 628b) auf dem Probenträger (120, 520, 620, 720) und einem oder mehreren Kopplungselementen (118a, 118b, 518a, 518b, 618a, 618b) in dem Körper (110, 510, 610, 710) des Autosamplers ist.

12. Autosampler (100, 600, 700) nach einem der vorstehenden Ansprüche, wobei der Probenträger (120, 520, 620, 720) um eine Achse drehbar ist, um sich so zwischen der Vielzahl von Abgabepositionen zu bewegen, vorzugsweise wobei ein oder mehrere Kopplungselemente (128a, 128b, 628a, 628b) auf dem Probenträger gleichachsig mit einem oder mehreren jeweiligen Kopplungselementen (118a, 118b, 518a, 518b, 618a, 618b) in dem Körper (110, 510, 610, 710) des Autosamplers sind.

13. Autosampler (100, 600, 700) nach Anspruch 12, wobei:
ein oder mehrere Kopplungselemente (128a, 128b, 628a, 628b) auf dem Probenträger (120, 520, 620, 720) von einem oder mehreren jeweiligen Kopplungselementen (118a, 118b, 518a, 518b, 618a, 618b) in dem Körper (110, 510, 610, 710) des Autosamplers in der Richtung der Achse beabstandet sind; und/oder
ein oder mehrere Kopplungselemente (128a, 128b, 628a, 628b) auf dem Probenträger (120, 520, 620, 720) und ein oder mehrere jeweilige Kopplungselemente (118a, 118b, 518a, 518b, 618a, 618b) in dem Körper (110, 510, 610, 710) des Autosamplers in der radialen Richtung im Wesentlichen gleich weit von der Achse entfernt sind.

14. Autosampler (100, 600, 700) nach einem der vorstehenden Ansprüche, ferner umfassend einen Sensor (117) zum Erfassen der Position und/oder der Art des Probenträgers (120, 520, 620, 720), vorzugsweise wobei der Sensor konfiguriert ist, um ein oder mehrere Kopplungselemente (128a, 128b, 628a, 628b) auf dem Probenträger zu erfassen, vorzugsweise wobei der Probenträger eine Kennung umfasst, die die Art des Probenträgers angibt, vorzugsweise wobei die Kennung ein oder mehrere Magnete (721a, 721b), die eine Anordnung aufweisen, die die Art des Probenträgers eindeutig kennzeichnet, ist.

15. System zum Analysieren einer Probe, umfassend:
den Autosampler (100, 600, 700) nach einem der vorstehenden Ansprüche, der konfiguriert ist, um die Probe abzugeben; und
ein analytisches Instrument, das konfiguriert ist, um die abgegebene Probe von dem Autosampler aufzunehmen und die abgegebene Probe zu analysieren, vorzugsweise wobei das analytische Instrument einer oder mehrere ist von: einem Elementaranalysator; einem Massenspektrometer; einem Ionenmobilitätsspektrometer; einem Infrarotspektrometer; einem Fourier-Transformations-Infrarotspektrometer; einem Nahinfrarotspektrometer; einem Fourier-Transformations-Nahinfrarotspektrometer; einem NMR-Spektrometer; einem UV/VIS-Spektrometer; einem Raman-Spektrometer; einem Ionenchromatographen; einem Titrator; einem Gaschromatographen; einem Gaschromatographiemassenspektrometer; und einem Flüssigkeitschromatographen.

## Revendications

1. Échantillonneur automatique (100, 600, 700) permettant de distribuer des échantillons, l'échantillonneur automatique comprenant :
un plateau à échantillons (120, 520, 620, 720) permettant de retenir les échantillons à distribuer, dans lequel le plateau à échantillons comprend une pluralité de porte-échantillons (122, 622, 722) et peut être déplacé entre une pluralité de positions de distribution, chaque porte-échantillon étant une cavité s'étendant d'une surface supérieure du plateau à échantillons jusqu'à une surface inférieure du plateau à échantillons ;
un corps (110, 510, 610, 710) de l'échantillonneur automatique, définissant une chambre scellable (114, 514, 614, 714) qui empêche une entrée de gaz dans la chambre scellable en cours d'utilisation, dans lequel la chambre scellable maintient le plateau à échantillons au sein de la chambre scellable, dans lequel le corps de l'échantillonneur automatique comprend un orifice (115, 615, 715) s'étendant à travers une paroi inférieure du corps, l'orifice étant destiné à permettre le passage d'un échantillon provenant de l'intérieur de la chambre scellable vers un système externe au corps ; et
un accouplement sans contact comprenant un ou plusieurs éléments d'accouplement (128a, 128b, 628a, 628b) sur le plateau à échantillons et un ou plusieurs éléments d'accouplement respectifs (118a, 118b, 518a, 518b, 618a, 618b) dans le corps de l'échantillonneur automatique, l'accouplement sans contact étant conçu pour exercer une force sur le plateau à échantillons à travers une surface de la chambre scellable, de façon à déplacer le plateau à échantillons entre la pluralité de positions de distribution ;
dans lequel la paroi inférieure du corps est agencée en dessous du plateau à échantillons, et chaque position de distribution de la pluralité de positions de distribution est une position du plateau à échantillons au niveau de laquelle un porte-échantillon de la pluralité de porte-échantillons est aligné avec l'orifice s'étendant à travers la paroi inférieure du corps.

2. Échantillonneur automatique (100, 600, 700) selon la revendication 1, comprenant en outre un moteur à l'extérieur de la chambre scellable (114, 514, 614, 714), le moteur étant conçu pour amener le plateau à échantillons (120, 520, 620, 720) à se déplacer à l'aide de l'accouplement sans contact.

3. Échantillonneur automatique (100, 600, 700) selon l'une quelconque des revendications 1 à 2, dans lequel l'accouplement sans contact est conçu pour forcer le plateau à échantillons (120, 520, 620, 720) en direction d'une base de la chambre scellable (114, 514, 614, 714).

4. Échantillonneur automatique (100, 600, 700) selon l'une quelconque revendication précédente, dans lequel la chambre scellable (114, 514, 614, 714) et le plateau à échantillons (120, 520, 620, 720) comprennent un ensemble d'une ou plusieurs saillies (719) et un ensemble complémentaire d'une ou plusieurs ouvertures (729) permettant d'aligner le plateau à échantillons au sein de la chambre scellable, de préférence dans lequel l'ensemble d'une ou plusieurs saillies est monté de manière rotative au sein de la chambre scellable et conçu pour venir en prise avec l'ensemble complémentaire d'une ou plusieurs ouvertures (729) sur le plateau à échantillons.

5. Échantillonneur automatique (100, 600, 700) selon l'une quelconque revendication précédente, dans lequel l'échantillonneur automatique (100, 600, 700) comprend une surface (113, 513, 613, 713) entre le plateau à échantillons (120, 520, 620, 720) et le corps (110, 510, 610, 710) de l'échantillonneur automatique qui comprend un matériau autolubrifiant, de préférence dans lequel : une surface intérieure (113, 513, 613, 713) dans la chambre scellable (114, 514, 614, 714) comprend du matériau autolubrifiant ; et/ou une surface du plateau comprend du matériau autolubrifiant.

6. Échantillonneur automatique (100, 600, 700) selon l'une quelconque revendication précédente, dans lequel l'accouplement sans contact est un accouplement magnétique sans contact.

7. Échantillonneur automatique (100, 600, 700) selon l'une quelconque revendication précédente, dans lequel :
le ou les éléments d'accouplement (128a, 128b, 628a, 628b) sur le plateau à échantillons (120, 520, 620, 720) comprennent un aimant permanent ; et/ou
le ou les éléments d'accouplement (118a, 118b, 518a, 518b, 618a, 618b) dans le corps (110, 510, 610, 710) de l'échantillonneur automatique comprennent un aimant permanent.

8. Échantillonneur automatique (100, 600, 700) selon l'une quelconque revendication précédente, dans lequel un ou plusieurs éléments d'accouplement (118a, 118b, 518a, 518b, 618a, 618b) dans le corps (110, 510, 610, 710) de l'échantillonneur automatique peuvent être déplacés, de façon à déplacer le plateau à échantillons (120, 520, 620, 720) entre la pluralité de positions de distribution.

9. Échantillonneur automatique (100, 600, 700) selon l'une quelconque revendication précédente, dans lequel le ou les éléments d'accouplement (118a, 118b, 518a, 518b, 618a, 618b) dans le corps (110, 510, 610, 710) de l'échantillonneur automatique comprennent un électroaimant conçu pour : exercer une force magnétique sur un ou plusieurs éléments d'accouplement (128a, 128b, 628a, 628b) sur le plateau à échantillons (120, 520, 620, 720) de façon à amener le plateau à échantillons à se déplacer entre la pluralité de positions de distribution ; et/ou appliquer un champ électromagnétique à un ou plusieurs éléments d'accouplement d'un actionneur au sein de l'échantillonneur automatique, de façon à amener le plateau à échantillons à se déplacer entre la pluralité de positions de distribution par induction électromagnétique.

10. Échantillonneur automatique (100, 600, 700) selon l'une quelconque revendication précédente, dans lequel un ou plusieurs éléments d'accouplement (128a, 128b, 628a, 628b) sur le plateau à échantillons (120, 520, 620, 720) sont positionnés au niveau d'un bord externe du plateau à échantillons.

11. Échantillonneur automatique (100, 600, 700) selon l'une quelconque revendication précédente, prise en dépendance de la revendication 4, dans lequel l'échantillonneur automatique est dépourvu de matériau autolubrifiant directement entre un ou plusieurs éléments d'accouplement (128a, 128b, 628a, 628b) sur le plateau à échantillons (120, 520, 620, 720) et d'un ou plusieurs éléments d'accouplement (118a, 118b, 518a, 518b, 618a, 618b) dans le corps (110, 510, 610, 710) de l'échantillonneur automatique.

12. Échantillonneur automatique (100, 600, 700) selon l'une quelconque revendication précédente, dans lequel le plateau à échantillons (120, 520, 620, 720) peut effectuer une rotation autour d'un axe de façon à se déplacer entre la pluralité de positions de distribution, de préférence dans lequel un ou plusieurs éléments d'accouplement (128a, 128b, 628a, 628b) sur le plateau à échantillons sont coaxiaux avec un ou plusieurs éléments d'accouplement respectifs (118a, 118b, 518a, 518b, 618a, 618b) dans le corps (110, 510, 610, 710) de l'échantillonneur automatique.

13. Échantillonneur automatique (100, 600, 700) selon la revendication 12, dans lequel :
un ou plusieurs éléments d'accouplement (128a, 128b, 628a, 628b) sur le plateau à échantillons (120, 520, 620, 720) sont espacés d'un ou plusieurs éléments d'accouplement respectifs (118a, 118b, 518a, 518b, 618a, 618b) dans le corps (110, 510, 610, 710) de l'échantillonneur automatique dans la direction de l'axe ; et/ou
un ou plusieurs éléments d'accouplement (128a, 128b, 628a, 628b) sur le plateau à échantillons (120, 520, 620, 720) et un ou plusieurs éléments d'accouplement respectifs (118a, 118b, 518a, 518b, 618a, 618b) dans le corps (110, 510, 610, 710) de l'échantillonneur automatique sont sensiblement équidistants de l'axe dans la direction radiale.

14. Échantillonneur automatique (100, 600, 700) selon l'une quelconque revendication précédente, comprenant en outre un capteur (117) permettant de capter la position et/ou le type du plateau à échantillons (120, 520, 620, 720), de préférence dans lequel le capteur est configuré pour capter un ou plusieurs éléments d'accouplement (128a, 128b, 628a, 628b) sur le plateau à échantillons, de préférence dans lequel le plateau à échantillons comprend un identificateur indiquant le type du plateau à échantillons, de préférence dans lequel l'identificateur est un ou plusieurs aimants (721a, 721b) ayant un agencement qui identifie de façon unique le type du plateau à échantillons.

15. Système permettant d'analyser un échantillon, comprenant :
l'échantillonneur automatique (100, 600, 700) selon l'une quelconque revendication précédente, conçu pour distribuer l'échantillon ; et
un instrument analytique conçu pour recevoir l'échantillon distribué en provenance de l'échantillonneur automatique et pour analyser l'échantillon distribué, de préférence dans lequel l'instrument analytique est un ou plusieurs parmi : un analyseur élémentaire ; un spectromètre de masse ; un spectromètre à mobilité ionique ; un spectromètre infrarouge ; un spectromètre infrarouge à transformée de Fourier ; un spectromètre infrarouge proche ; un spectromètre infrarouge proche à transformée de Fourier ; un spectromètre RMN ; un spectromètre UV/VIS ; un spectromètre Raman ; un chromatographe ionique ; un titrimètre ; un chromatographe en phase gazeuse ; un chromatographe en phase gazeuse couplé à un spectromètre de masse ; et un chromatographe en phase liquide.
